# EUROPEAN PATENT SPECIFICATION

(11) **EP 2 424 157 B1**
(45) Date of publication and mention of the grant of the patent: **10.02.2016**
(21) Application number: 10844400.1
(22) Date of filing: 29.03.2010
(51) Int. Cl.: H04L 9/32, G06K 7/00

(54) **METHOD AND SYSTEM FOR NEAR FIELD COMMUNICATION**
VERFAHREN UND SYSTEM ZUR NAHFELDKOMMUNIKATION
PROCÉDÉ ET SYSTÈME DE COMMUNICATION EN CHAMP PROCHE

(30) Priority: 29.01.2010 CN 201010300975
(43) Date of publication of application: 29.02.2012
(73) Proprietor: Nationz Technologies Inc., Shenzhen, Guangdong 518057 (CN)
(72) Inventor: SHEN, Aimin, Guangdong 518057 (CN); LUO, Weixi, Guangdong 518057 (CN)
(74) Representative: Hanna, Peter William Derek
(86) International application number: PCT/CN2010/071395
(87) International publication number: WO 2011/091622

(56) References cited:
- WO-A2-2008/009830
- CN-A- 1 643 806
- CN-Y- 201 134 107
- CN-Y- 201 172 588

## Description

### Technical field

The present invention relates to a communication field, especially relates to a near field communication method and system

### Background Technology

With the popularity of mobile terminals, there is an urgent demand for application of the mobile terminal payment realized by using the mobile terminals, and currently there are many implementing solutions for application of the mobile terminal payment, which have respective disadvantage. At the present day, methods appear for realizing near field communication of the mobile terminal by adding RF functionalities on Subscriber Identify Module (SIM) card of mobile terminals (known as SIM card) or adding near field communication modules on the mother board of the mobile terminal. The appearance of such method makes the mobile terminal become super smart terminals which can facilitate charge, consumption, transaction and identity authentication, greatly meeting urgent demand of the market.

The solution of near field communication for the mobile terminal based on a RF SIM card attracts wide concern due to its advantages of simplexes and no need to transform the mobile terminals. In the solution, the RF SIM card adopts UHF (Ultrahigh Frequency) technology. Since the RF SIM card which uses UHF, especially uses ISM common frequency (i.e. industrial, scientific and medical frequency) of 2.4GHz, has a high working frequency and adopts very small antenna, the sufficient strong signal can be transmitted when a small antenna is disposed in the SIM card. And the RF signals can be transmitted from the mobile terminals even if the RF SIM card is embedded into the mobile terminal. A RF (Radio Frequency) transceiver chip prevailing in the field being applied to a card reader enables most of RF signals of the mobile terminals to be received reliably without being amplified additionally, thus making the mobile terminals have near field communication functionalities without making any structural transform to the existing mobile terminals. However, different cellular phones, due to differences in internal structures thereof, have a very large variance in their effectiveness of transmitting RF signal. The RF SIM card of those mobile terminals that are strong in transmission has a RF communication range of several meters. The RF SIM card of those mobile terminals that are weak in transmission may also have a RF communication range of a few centimeters. To avoid a large variance of the RF signal attenuation for different mobile terminals, the mobile terminals must be calibrated, i.e. attenuating parameters of the mobile terminals must be recorded into the card before used. A major problem of the RF SIM lies in that it needs to be calibrated.

Another technology NFC for a mobile payment is derived form a contactless card technology based on ISO14443 standard. The fundamental principles of both technologies are to transmit signals and energy using a magnetic field of 13.56 MHz. The main problem of the NFC technology is as follows:
1. It is required to transform the mobile terminals to reliably achieve an two-way data communication, and a field coil of NFC can not be integrated into a card used in the mobile terminal, for example a SIM card or a SD card (Secure Digital Memory Card)/TF(TransFlash).
2. At a frequency of 13.56, signals and energy are transmitted between the card reader and the card by using a mode of inductance coil coupling, moreover energy and amplitude-modulated signals of 13.56 MHz are transmitted at the same time in a direction from the card reader to the card, with a high demand for the area of the card for receiving the coil; in the direction from the card to the card reader, the card transmits signals to the card reader via a load modulation mode for coils of the card in condition of short circuit and open circuit, rather than via the mode of directly transmitted field strength by external energy. Due to load modulation signals require that the higher a coupling coefficient between a coil of the card and a coil of the card reader is, the more easily the signal transmitted from the card is decoded by the card reader. The mode further improves the demand for the size and area of the antenna of the card. On the other hand, due to the lower frequency of 13.56 MHz, the size of the coupling coil is relatively large. Considering the above factors, NFC requires that the antenna coil in the mobile terminal is sufficient large, with the result that the antenna coil of the size can not be placed into a card for use in the mobile terminal for example SIM card or SD/TF card. Moreover, the metal object or other conductive object in the mobile terminal also severely disturb receiving effect and load modulation effect of the antenna. To achieve better near field communication effect, a cell phone must be made structural transform to suit for customization, so that the antenna achieves the best effect. The transform can be made for example by placing several turns of antenna to a back cover of a battery of the mobile terminal, or by introducing the antenna from a mother board of the mobile terminal to the back surface of the battery via a flexible PCB to enable the area of the antenna correspond to that of an usual battery, In addition, the back cover of the cell phone can not be made of no-metallic material.
2. NFC having a frequency of 13.56 MHz needs to be calibrated for distance control.
   Although there is a kind of NFC antenna which can be used to any mobile terminals, due to using frequency of 13.56MHz, the signal at the frequency will produce an intense eddy-current effect on passing a metal object and other conductive object, and the signal strength will vary with the structure of the mobile terminal, so that the field strength will generate signifcant fluctuation on the receiver antenna of the NFC card, resulting in that distance control can not be achieved without calibration.

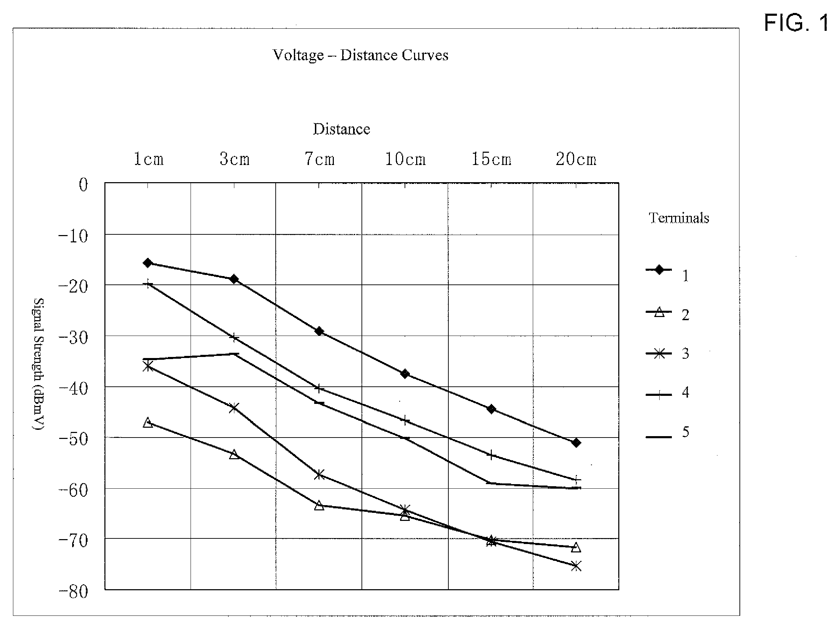

Fig. 1 is a voltage-distance curve detected in the condition that the same 14443 POS machine maintains a constant carrier of 13.56 MHz frequency when the coil receiver circuit is placed into various mobile terminals, in which the signal strength value is the value obtained after the receiver antenna induction voltage is amplified necessarily. Since the amplification factor maintains constant, an attention is only paid to the relative variation of the strength value with the distance. It can be seen that, the field strength difference received by different terminals is greater than 30dB, the field strength variation within a distance from 1 cm to 10cm for the same terminal is about 25dB, and the field strength variation resulting from difference of cell phones goes beyond the field strength variation within a distance from 1cm to 10cm for the same terminals. Therefore, the same threshold can not be used to various terminals to perform distance control, i.e. it is impossible to achieve distance control without calibration.

WO2008009830A2, CN201134107Y, and CN1643806A are representative of the present state of the art.

### Summary of the Invention

The present invention provides near field communication methods in accordance with the claims which follow.

The technical problem to be addressed by the invention is to provide a near field communication method and a near field communication system, so that various mobile terminals having near field communication function can perform swiping transaction for example an electronic payment, without calibration.

To solve the technical problem, the invention proposes a near field communication method for a near field communication system comprising at least one card reader and at least one mobile RF device, the method comprises the following steps:
step a, the card reader transmits low frequency alternating magnetic signals according to preset transmission parameters, the low frequency alternating magnetic signals carrying identification information of the card reader, the transmission parameters comprising frequencies for the low frequency alternating magnetic signals which are equal to or less than the highest working frequency f0 of the system at which the system needs not to be calibrated;
step b, the mobile RF device receives and detects the low frequency alternating magnetic signals on every distance points and amplifies them to voltage signals with constant amplitudes and corresponding to the distances, and thus determines whether the terminal equipped with the mobile RF device enters a preset effective distance range using a preset voltage threshold Vt, wherein the voltage threshold Vt is the same for all terminals equipped with the mobile RF device;
step c, if the voltage signals corresponding to the received low frequency alternating magnetic signals are greater than or equal to the preset voltage threshold Vt, the terminal equipped with the mobile RF device enters a preset effective range for swiping card, then the mobile RF device acquires the identification information of the card reader from the received low frequency magnetic signals, and transmit it together with the identification information itself to the card reader through the RF channel;
step d, the card reader receives an information transmitted through RF channel by the mobile RF device, compares whether the identification information of the card reader in the above information is consistent with the identification information itself; if it is, the identification information itself is combined with the identification information of the mobile RF device to act as a combined address, thus performing swiping transaction with the mobile RF device through the RF channel.

Further, the above method may have the following characteristic, in said step a, the highest frequency f0 for operation of the system without calibration can be determined by the following steps:
step a1, determining distance control target values (Din, Dv) for the system, wherein Din indicates that all terminals equipped with the mobile RF device can be ensured to be swiped in the range of 0 ∼ Din, Dv indicates a distance fluctuating range, thereby the card being able to be swiped in the range of Din ∼ (Din + Dv), and being not able to be swiped beyond the range of Din + Dv;
step a2, determining a fluctuating range δ_{R} of the detection voltage for the mobile frequency device caused by the card reader;
step a3, determining a fluctuating range δ_{C} of the detection voltage caused by the mobile RF device itself;
step a4, detecting the voltage-distance curve for various typical terminals and obstacles at the frequency of f;
step a5, determining the fluctuating range δ_{A} of the detection voltage for the mobile RF device according to the distance control target value (Din, Dv), wherein δ_{A} is equal to a voltage difference between the voltage corresponding the point Din and the voltage corresponding the point (Din + Dv) in the voltage-distance curve with an average field strength attenuation curve gradient obtained from respective voltage-distance curves for typical terminals and obstacles;
step a6, determining a fluctuating range δ_{T} of the detection voltage for the mobile RF device caused by the terminal, wherein δ_{T} indicates the fluctuating range of the detection voltage for the mobile RF device caused by attenuating characteristic of the terminal, δ_{T}=δ_{A} -δ_{R} -δ_{C};
step a7, obtaining the largest field strength difference δ between various typical terminals and obstacles on different distance points within the distance control ranges;
If δ is greater than δ_{T}, the frequency f is lowered and step a4 is turned to; if δ is less than δ_{T}, the frequency f is increased and step a4 is turned to; and if δ is equal to δ_{T}, the current detecting frequency f is equal to the highest working frequency f0 of the system without calibration.

Further, the above method may have the following characteristic, in said step a, the transmission parameters comprise a modulation mode, an encoding mode and a transmitting magnetic induction strength amplitude Br, wherein the modulation mode, the encoding mode and the transmitting magnetic induction strength amplitude Br can be determined by means of the following steps:
selecting any one of encoding modes without an average direct current component;
selecting no modulation mode or an amplitude-invariable carrier modulation mode;
after selecting a working frequency less than f0, a modulation mode and an encoding mode, firstly selecting a typical noise terminal and gain parameters for the magnetic detection and amplification in the mobile RF device which is easily realized, detecting an intrinsic noise voltage amplitude Vn for the detection voltage in the mobile RF device in the condition of the low frequency magnetic signals being not transmitted by the card reader, then measuring a detection voltage Vr of the mobile RF device when the card reader transmits the low frequency alternating magnetic signals using the selected modulation and encoding modes, selecting a transmitting magnetic induction strength amplitude Br to meet Vr/Vn>SNR, in which SNR is a signal to noise ratio of the mobile RF device.

Further, the above method may have the following characteristic. In said step b, the preset voltage threshold Vt can be determined by the following steps:
step b1, at the selected transmission parameters, measuring a voltage-distance curve for various typical terminals and obstacles, wherein the transmission parameter comprises the frequency of the low frequency alternating magnetic signals, the modulation mode, the encoding mode and the transmitting magnetic induction strength amplitude Br;
step b2, obtaining a reference voltage-distance curve, wherein the reference voltage-distance curve is the average value obtained from the voltage-distance curves for the typical terminals and obstacles, which has the same voltage amplitude difference δ_{T}/2 from the upper bound and the lower bound of the typical terminal curves;
step b3, selecting a detection voltage threshold Vt for the mobile RF device, the voltage corresponding to the point (Din+Dv/2) being Vt on the reference voltage-distance curve.

Further, the above method may have the following characteristic, the frequency of the low frequency alternating magnetic signals is set in an extra low frequency band or a very low frequency band or a low frequency band, wherein the extra low frequency band is in a frequency range of 300 KHz∼3 000 Hz, the very low frequency band is in a frequency range of 3 KHz ∼30 KHz, and the low frequency band is in a frequency range of 30 KHz∼300 KHz.

Further, the above method may have the following feature. The frequencies of the low frequency alternating magnetic signals can be 300 KHz∼50 KHz.

Further, the above method may have the following feature. The frequency of the low frequency alternating magnetic signals can be 500 Hz, 1 Khz, 1.5 KHz, 2 KHz, 2.5 KHz, 3 KHz, 4 KHz, 5 KHz, 10 KHz, 20 KHz or 30 KHz.

Further, the above method may have the following feature. The encoding mode can be Manchester code, differential Manchester code, or return to zero code; and the modulation mode can be on-off keying, phase shift keying or frequency shift keying.

To solve the above problem, the invention proposes a near field communication system, comprising at least one card reader and at least one mobile RF device, wherein:
the card reader is used for transmitting low frequency alternating magnetic signals according to preset transmission parameters, the low frequency alternating magnetic signals carrying an identification information of the card reader, in which the transmission parameters comprises frequency of the low frequency alternating magnetic signals which is the same as or less than the highest working frequency of the system at which the system needs not to be calibrated; the card reader is also used for receiving information transmitted through a RF channel by the mobile RF device, and for comparing whether the identification information of the card reader in the above information is consistent with the identification information itself; if it is, the identification information itself being combined with the identification information of the mobile RF device to act as a combined address, thus performing swiping transaction with the mobile RF device through the RF channel;
the mobile RF device is used for receiving and detecting the low frequency alternating magnetic signals on every distance point and amplifying them to voltage signals with constant amplitude and corresponding to the distance, thereby determining whether the terminal equipped with the mobile RF device enters a preset effective distance range using a preset voltage threshold Vt, wherein the voltage threshold Vt is the same for all terminals equipped with the mobile RF device; if the voltage signals corresponding to the received low frequency alternating magnetic signals are greater than or equal to the preset voltage threshold Vt, the mobile RF device is used for acquiring the identification information of the card reader from the received low frequency magnetic signals, and transmitting it together with the identification information itself to the card reader through the RF channel; the mobile RF device is further used for performing swiping transaction with the card reader through the RF channel.

Further, the above system may have the following features. The card reader comprises at least one low frequency transmission coil, at least one driver circuit, at least one encoding circuit, at least one first main processor, at least one RF transceiver circuit and at least one RF antenna, wherein the low frequency transmission coil, the driver circuit, the encoding circuit, the first main processor, the RF transceiver circuit, the RF antenna are connected in series; the mobile RF device comprises at least one low frequency magnetic induction circuit, at least one low frequency amplification circuit, at least one threshold judgment and demodulation circuit, at least one second main processor, at least one RF transceiver circuit and at least one RF antenna, wherein the low frequency magnetic induction circuit, the low frequency amplification circuit, the threshold judgment and demodulation circuit, the second main processor, the RF transceiver circuit and the RF antenna are connected in series.

Further, the above system may have the following characteristic. A modulation circuit is provided between the driver circuit and the encoding circuit of the card reader.

Further, the above system may have the following characteristic. The low frequency transmission coils can be coils formed of enameled wires or PCB coils.

Further, the above system may have the following characteristic. The turns of the low frequency transmission coils can be more than 10 turns.

Further, the above system may have the following characteristic. The turns of the low frequency transmission coils can be 50∼500 turns.

Further, the above system may have the following characteristic. The low frequency transmission coils can be filled with ferrite magnetic cores or iron cores.

Further, the above system may have the following characteristic. An area enclosed by the low frequency transmission coils has a width in the widest section which is greater than the width of the section of the mobile RF terminal.

Further, the above system may have the following characteristic. The section of the area enclosed by the low frequency coils comprises at least a circle region with a diameter of 3cm or a square region of 3cm*3cm.

Further, the above system may have the following characteristic. The low frequency magnetic induction circuit can be PCB coils, coils formed of enameled wires, a Hall device or a giant magneto resistance device.

Further, the above system may have the following characteristic. The mobile RF device can be disposed in the mobile terminal.

Further, the above system may have the following characteristic. The mobile RF device can be disposed in a SIM card, UIM card, USIM card, TF card or SD card of the mobile terminal.

Further, the above system may have the following characteristic. The mobile terminal can be a cell phone, a personal digital assistant or a notebook computer.

Further, the above system may have the following characteristic. The identification information is identification codes.

The present invention can enable the data communication distance, between the RF communication terminal comprising a mobile RF device (for example a cell phone including a RF SIM card) and the card reader, to be reliably controlled within a given scope without the need of calibrating the terminal.

### Brief Description of Accompanying Drawings

Fig. 1 is a voltage-distance curve detected in the condition that the same 14443 POS machine maintains a constant carrier of 13.56 MHz frequency when the coil receiver circuit is placed into various mobile terminals;
Fig. 2 is a structural block diagram of a system for selecting the highest frequency f0 according to the near field communication method of the present invention, at which the system does not need to be calibrated;
Fig. 3 is a diagram showing a fluctuating range δA of the total received detection voltage for the system, which is determined by the distance control target value (Din, Dv);
Fig. 4 is a diagram showing voltage-distance curves for the typical terminals and obstacles and the fluctuating range δ therebetween;
Fig. 5 shows voltage-distance curves for five typical mobile terminals at the frequency f of 3.3 KHz;
Fig. 6 shows voltage waveforms for the received voltage signals detected in the mobile RF device via a direct baseband transmission without modulation and the received voltage signals via a sine wave FSK modulation mode;
Fig. 7 is a diagram showing a method for obtaining reference voltage-distance curve;
Fig. 8 is a structural diagram of the near field communication system according to an embodiment of the present invention;
Fig. 9 is a diagram showing the low frequency transmitting portion of the card reader.
Fig. 10 is a diagram showing a low frequency data frame format of the card reader;
Fig. 11 is a voltage-distance curve detected in the condition that a signal source transmits constant magnetic field of 1 KHz via a low frequency transmission coil when the coil receiver circuit is placed into various mobile terminals.

### Detailed Description of the Preferred Embodiments

Firstly stated, the terminal(s) mentioned in the following refers to the terminal(s) equipped with a mobile RF device by default, but also refers to the terminal(s) which can be movable, i.e. the mobile terminal, for example a cell phone etc. A distance refers to the distance between the card reader and the mobile RF device, i.e. the distance between the card reader and the terminal equipped with the mobile RF device.

In view of the problem of controlling the distance between the RF device (especially the RF card, for example the RF SIM card, built in the terminal) and the card reader device which transact in a short distance, the present invention proposes a near field communication system which comprises a card reader with the functions of transmitting a low-frequency alternating magnetic field and receiving and transmitting RF signal and a mobile RF device corresponding to the card reader, with the functions of receiving a low-frequency alternating magnetic field induction and receiving and transmitting RF signal, also proposes a near field communication method corresponding to the system. In accordance with the present invention, the distance can be controlled by utilizing the characteristic of the low frequency alternating magnetic field having little attenuation variation upon penetrating different terminals and transaction can be conducted by a high frequency RF effectively penetrating the terminal to achieve two-way communication. The system accomplishes distance detection and control without calibration by a preset threshold judgment method, namely, the card reader transmits the low frequency alternating signals according to preset transmission parameters, and the magnetic signals is detected by the mobile RF device on various distance points and are amplified to a voltage signals having a constant amplitude value and corresponding to the distance. Then it is determined whether the terminal enters a preset effective distance range via a preset voltage threshold Vt (the effective distance range indicates an allowable card-swiping range). The voltage threshold Vt is the same for all terminals, without the need to be calibrated. The present invention achieves the only binding between the card reader and the mobile RF device by the method of combining low frequency one-way communication and RF two-way communication, and after binding, two-way high speed communication with a large number of data can be accomplished through RF channel. The system of the present invention can reliably control the data communication distance between the terminal of the mobile RF device (for example a cell phone equipped with RF SIM card) and the card reader to a given range, and it is unnecessary to calibrate the terminal.

The principle and characteristics of the present invention will be described in accompany with the drawings, in which the illustrated examples are only for explaining the present invention, not intending to limit the scope of the invention.

The near field communication method of the present invention applies to the near field communication system including at least one card reader and at least one mobile RF device, which comprises the following four steps including step a, step b, step c and step d. The four steps are described respectively herein as follows:
Step a, the card reader transmits low frequency alternating magnetic signals according to preset transmission parameters, the low frequency alternating magnetic signals carrying identification information of the card reader, the transmission parameters comprise frequency of the low frequency alternating magnetic signals which are the same as or less than the highest frequency f0 of the system at which the system needs not to be calibrated; and wherein, identification information may be identification code ID.

It should be noted that, in step a, the frequency of the low frequency alternating magnetic signals refers to a frequency corresponding to a high end frequency end point of 3dB bandwidth on a frequency spectrum of the low frequency alternating signals.

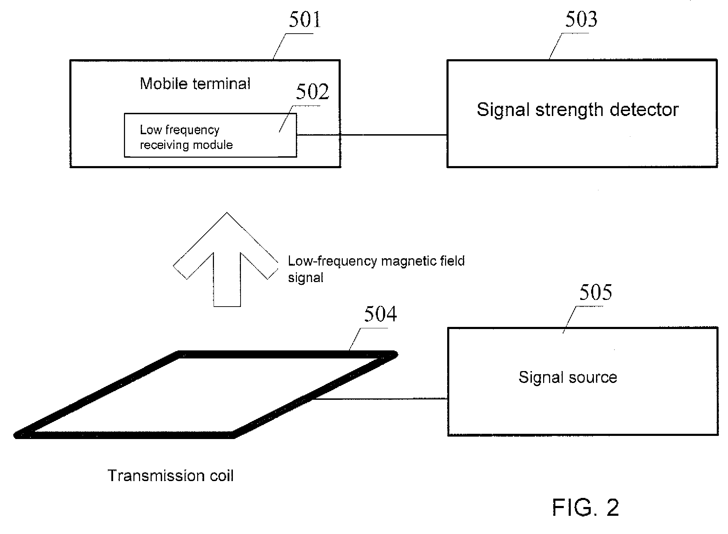

The lower the frequency of the low frequency magnetic field is, the less the attenuation variance of the signals after penetrating various kinds of the terminals is. In light of the characteristics, a frequency point having a sufficient little variance is selected in a frequency point selecting system (as shown in Fig. 2) to realize distance control without calibration. The low frequency alternating magnetic signals is transmitted by a standard magnetic field emission coil using a standard signal source, and the low frequency alternating magnetic signals are received in various typical mobile terminals and obstacles. Then the transmitting frequency is adjusted until a frequency point f0 is found, so that in the condition that the voltage (the voltage is a voltage signal obtained by being amplified by the low frequency alternating magnetic signal, the voltage signal having a constant amplitude and being corresponding to the distance) received by the mobile RF device (equipped in the mobile terminal) has the same distance with the central points of the plane formed by the emission coils, the magnetic field variance between various terminals and obstructions is generally equal to a preset fluctuation range δ_{T}. The frequency point f0 and the frequency range is the frequency range for the system without calibration, without the need for the system to calibrate any terminals. If an operating frequency point is above f0, the system needs to be calibrated, and the more the operating frequency points above f0 are, the more the terminals which need to be calibrated are, so that the calibration becomes more complex. The selection of the frequency point is a one-time operation. Once selection, there is no need to be revised.

Fig. 2 is a structural block diagram of a system for selecting the highest frequency f0 according to the near field communication method of the present invention, at which the system does not need to be calibrated. As shown in Fig. 2, the frequency point selection system includes: a transmitting system, including a signal source 505 and a low frequency magnetic field transmission coil 504; a receiver system, including a typical mobile terminal 501 in which a low frequency receiver module 502 is provided, an obstacle and a signal strength detector 503 (a voltmeter, an oscillograph, a frequency spectrograph, etc.). The signal source 505 can accurately generate signals of various frequencies, various waveforms and various amplitudes. The principle of selecting a frequency point is that, the signal source 505 generates a sine wave signal of a constant amplitude and having a frequency of f, and the signal is transmitted b y the transmission coil 504 and is received by the low frequency receiver module 502 which is disposed in the selected typical mobile terminal 501 and the obstacle. The received low frequency signal is received by the signal strength detector 503 through a special signal wire, and the signal strength detector 503 detects the received voltage. A varying curve of the detection voltage as a function of distance at the frequency of f for the mobile terminal or the obstacle can be obtained by varying the distance of the mobile distance (hereinafter referred to as voltage-distance curve). Several curves for different mobile terminals can be obtained by replacing the mobile terminal or the obstacle, and different curves can be obtained by changing the frequency f.

In step a, the highest frequency f0 for the system operation without calibration can be determined by the following steps:
Step 101, determining a distance control target value (Din, Dv), wherein Din indicates that all terminals equipped with the mobile RF device are ensured to swipe card in the range of 0-Din, Dv indicates a distance fluctuating range, the card being able to be swiped in the range of Din ∼ (Din + Dv), and being not able to be swiped beyond the range of Din + Dv;

For instance, (5cm, 5cm) indicates all terminals can be ensured to swipe card in a range of below 5cm, be allowed to swipe card in a range of 5cm - 10cm and not to permit to swipe card beyond 10cm. The distance control target value can be determined by special application. (0 ∼ Din +Dv) can be referred to as distance control range.

Step 102, determining a fluctuating range δ_{R} of the detection voltage of the mobile frequency device caused by the card reader;
Parameters fluctuation of the transmission circuit of the card reader brings fluctuations of transmitting field strength, causing fluctuation of the detection voltage of the mobile RF device. The parameters comprise transmitted driver voltage fluctuations, coil parameters fluctuations and temperature influences etc. δ_{R} is controlled during a designing and manufacturing process for the card reader. The fluctuation can be calibrated during the manufacturing process. Due to the low working frequency of the low frequency transmission circuit, δ_{R} can be well controlled, for example within 4dB.

Step 103, determining a fluctuating range δ_{C} of the detection voltage caused by the mobile RF device itself;

The parameters fluctuation of the low frequency receiver circuit of the mobile RF device itself brings the fluctuation of final detection output voltage. The parameters comprise errors of the receiver antenna, errors of the amplifier's gain, errors of a comparer or AD, temperature effects and noises and the like. δ_{C} is controlled during the designing and manufacturing process of the mobile RF device. The fluctuation can be calibrated during the manufacturing process. Since the working frequency of the low frequency transmission circuit of the mobile RF device is very low, δ_{C} can be well controlled, for example within 4dB.

Step 104, detecting the voltage-distance curves of various typical terminals and obstacles at the frequency of f.

Preparation is made before the step 104 is started, namely, selecting typical terminals and typical obstacles. A principle for selecting typical terminals is to make a selection based on the number of the terminal metals or conductive structures. That is to say, the more the number of the metal structures are, the lower the attenuation amplitude is. For example, a plastic housing, a metal housing, a thick metal housing, a thin metal housing, a terminal of a large size and a terminal of a small size etc. can be selected. The number of the typical terminals is not limited strictly, and the selection of the typical terminals can eliminate the attenuating characteristic of the low frequency alternating magnetic signal caused by the terminal. To avoid a large difference of an individual mobile terminal, model certification can be applied to the mobile terminal in application, so that a card-swiping detection is conducted for every mobile terminal supporting payment application to determine that the attenuating characteristic of the mobile terminal of the model meets requirement. A typical obstacle can select various conventional materials for a mobile terminal, for example plastic, aluminum, copper, iron, stainless steel etc., having a standard shape. The typical obstacle is placed between the card reader and the mobile RF device as an equivalent obstacle for detecting attenuating characteristic of the mobile terminal to measure attenuating effect.

Step 105, determining the fluctuating range δ_{A} of the detection voltage of the mobile RF device according to the distance control target value (Din, Dv), δ_{A} is equal to the difference between the voltage corresponding the point Din and the voltage corresponding the point (Din+Dv) in the voltage-distance curve with average field strength attenuation curve gradient obtained by respective voltage-distance curves due to typical terminals and obstacles;

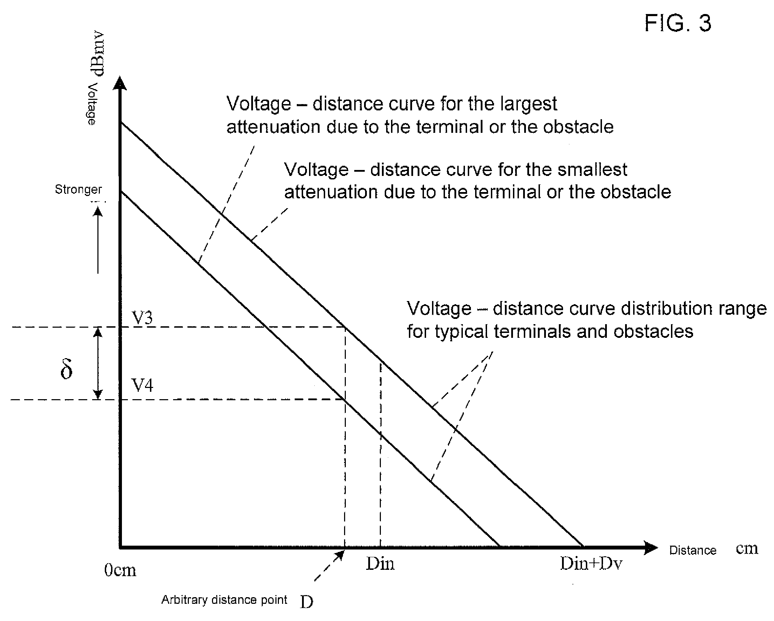

Fig. 3 is a diagram showing the fluctuating ranges δ_{A} of the total received detection voltage for the system, which is determined by the distance control target value (Din, Dv). As shown in Fig. 3, the point (Din+Dv) corresponds to the voltage V2, and the point (Din+Dv) corresponds to the voltage V1, thereby δ_{A} =V1-V2.

Step 106, determining a fluctuating range δ_{T} of the detection voltage of the mobile RF device caused by the terminal, wherein the parameter δ_{T} indicates the fluctuating range of the detection voltage of the mobile RF device caused by attenuating characteristic of the terminal, δ_{T} =δ_{A} -δ_{R} -δ_{C};

Step 107, obtaining the largest field strength difference δ (also referred to as the fluctuating region) between various typical terminals and obstacles on different distance points within the distance control range. If δ is greater than δ_{T}, the frequency f is lowered and step a4 is started; if δ is less than δ_{T}, the frequency f is increased and step a4 is started; and if δ is equal to δ_{T}, the current detecting frequency f is equal to the highest frequency f0 of the system without calibration.

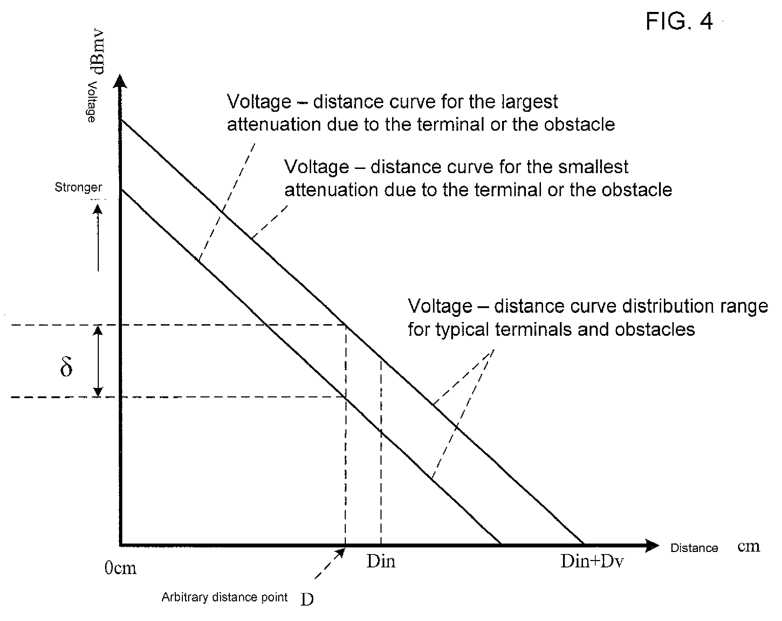

Fig. 4 is a diagram of the voltage-distance curve and the fluctuating region δ of the typical terminals and obstacles. As shown in Fig. 4, the voltage-distance curve for the terminals or obstacles with the largest attenuation is referred to as the largest attenuation curve, the voltage-distance curve for the terminals or obstacles with the smallest attenuation is referred to as the smallest attenuation curve, and the area enclosed by the largest attenuation curve and the smallest attenuation curve is referred to as the voltage-distance curve distributing region of the typical terminals and obstacles. Any distance D corresponds to voltage V3 in the smallest attenuation curve and corresponds to voltage V4 in the largest attenuation curve, so that δ = V3-V4.

Thus, in the condition of limiting the distance control target value, the highest frequency f0 for the system operation without calibration can be determined. The system can use modulation mode or use the mode of directly sending baseband signals. The distance control can be conducted without calibration as long as the main frequency component for the system operation is no more than f0.

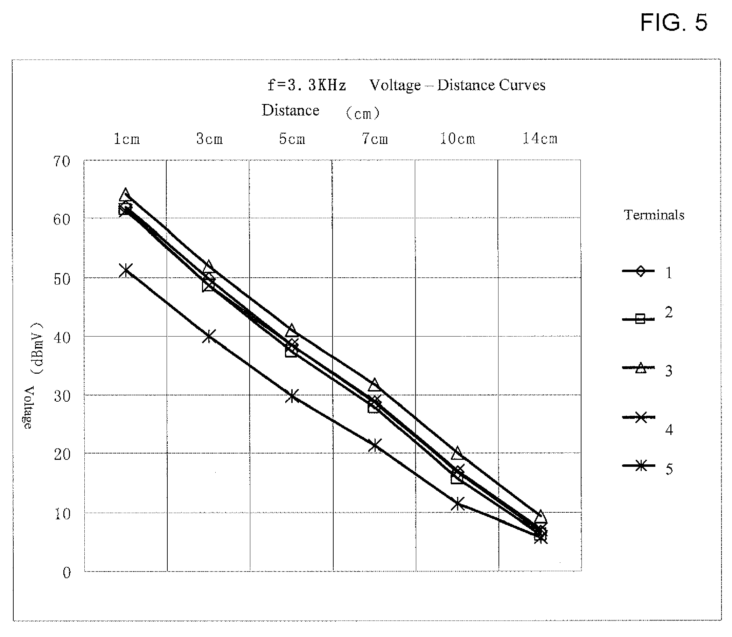

As an example, the determining process of f0 will be explained. Fig. 5 shows voltage-distance curves of five kinds of typical mobile terminals at a frequency f of 3.3 KHz. As shown in Fig. 5, the distance control target value of the system is (5cm, 5 cm), and the voltage variation is about 40db in a distance region of 0∼10cm for the system. The fluctuation range of the detection voltage of the mobile RF device caused by the card reader and the mobile RF device is 4dB, namely δ_{R} = δ_{C} = 4dB, δ_{A} = 20dB, δ_{T}=δ_{A} - δ_{R}-δ_{C}=12dB. Supposing the five terminals can stand for all terminals used in the system, if the largest fluctuation of various distance points on various curves is about 12dB, so that the highest frequency f0 of the system without calibration can be determined to be 3.3 KHz.

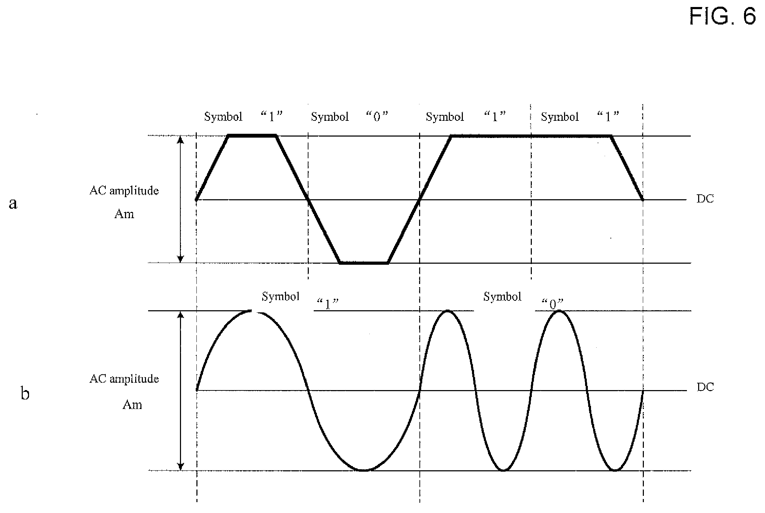

In step a, the transmission parameters comprises a modulation mode, an encoding mode and a transmitting magnetic induction strength amplitude Br. The general principle for selecting the transmission parameters is to ensure that, for every distance point, the low frequency alternating magnetic signal transmitted by the card reader, after being detected and amplified by the mobile RF device, is the voltage signal with constant amplitude and corresponding to the distance. Fig. 6 shows voltage waveform diagrams of the received voltage signals via direct baseband transmission without modulation and the received voltage signals with sine wave FSK modulation, wherein, a is the received voltage signals waveform diagram via direct baseband transmission without modulation, b is the received voltage signals wave form diagram by the sine wave FSK modulation. As shown in Fig. 6, the detection voltage signals are variable voltage signals comprising demodulation information, in which the signals can be alternating voltage signals without direct current component, and can also be voltage signals with direct current component, and amplitudes being constant indicate that the largest changing amplitudes of the alternating components are constant for different transmitting symbols.

The modulation mode, the encode mode and the transmitting magnetic induction strength amplitude Br of the transmission parameters can be selected through the steps a11 - a13:
Step a1, selecting any one of encode mode without direct current component, for example Manchester code, differential Manchester code, return to zero code etc;
Step a12, selecting no modulation mode or amplitude-invariable carrier modulation mode, wherein the carrier modulation mode can select any one amplitude-invariable modulation mode, for example carrier can use sine waves, pulses, triangular waves etc., and the modulation mode can select on-off keying (OOK), phase shift keying or frequency shift keying (FSK) etc; when using no modulation mode, the baseband signals after being encoded are driven directly by a driver circuit and transmitted by a transmission coil.
Step a13, selecting transmitting magnetic induction strength amplitude Br. The method is as follows: at the selected working frequency less than f0, the modulation mode and the encoded mode, firstly selecting a typical noise terminal and gain parameters for magnetic detection and amplification in the mobile RF device which is easily achieved, detecting intrinsic noise voltage amplitude Vn for the detection voltage in the mobile RF device in the condition of low frequency magnetic signal being not transmitted by the card reader, then measuring detection voltage Vr of the mobile RF device when the card reader transmits low frequency alternating magnetic signals using selected modulation and encode modes, and selecting transmitting magnetic induction strength amplitude Br to meet Vr/Vn>SNR, wherein SNR is signal to noise ratio of the mobile RF device. The greater the SNR value is, the better. However, if the SNR value is too great, the transmitting power of the card reader will be too great so that it is difficult to implement. The typical value can be selected as SNR=10. When SNR is determined, Br can be determined by the above mode.

Step b, the mobile RF device receives and detects the low frequency alternating magnetic signals on every distance points and amplifies it to voltage signals with constant amplitudes and corresponding to the distances, and thus determines whether the terminal equipped with the mobile RF device enters a preset effective distance range using preset voltage threshold Vt, wherein the voltage threshold Vt is the same for all terminals equipped with the mobile RF device;

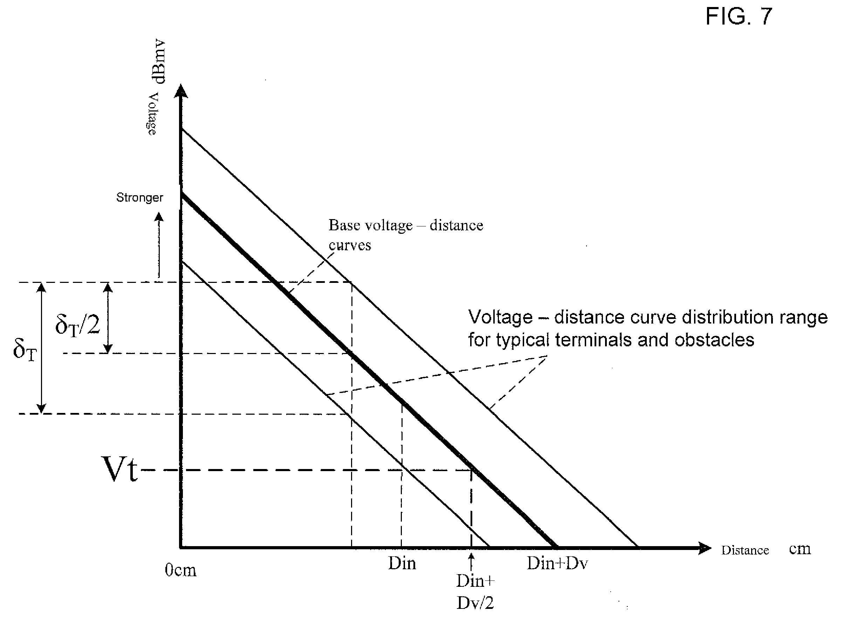

In step b, preset voltage threshold Vt can be determined by steps 201 to 203:
Step 201, at the selected transmission parameters, measuring voltage-distance curve for various typical terminals and obstacles, wherein, the transmission parameter comprises the frequencies of low-frequency alternating magnetic signals, the modulation mode, the encoding mode and the transmitting magnetic induction strength amplitude Br;
Step 202, obtaining a reference voltage-distance curve, wherein the reference voltage-distance curve is the average value obtained from the voltage-distance curves for the typical terminals and obstacles, which has a voltage amplitude difference δ_{T}/2 from the upper bound and the lower bound of the typical terminal curves, as shown in Fig. 7;
Step 203, selecting detection voltage threshold value Vt for the mobile RF device, as shown in Fig. 7, the voltage corresponding to point (Din+Dv/2) is Vt on the reference voltage-distance curve.

Step c, if the voltage signal corresponding to the received low frequency alternating magnetic signal is bigger than or equal to the preset voltage threshold Vt, the terminal equipped with the mobile RF device enters the preset effective range for swiping card, then the mobile RF device acquires identification information of the card reader from the received low frequency magnetic signals, and transmit it together with the identification information itself to the card reader through RF channel;

Step d, the card reader receives information transmitted by the mobile RF device through RF channel, compares whether the identification information of the card reader in the above information is consistent with the identification information itself; if it is, the identification information itself is combined with the identification information of the mobile RF device to act as a combined address, thus performing card-swiping transaction with the mobile RF device through the RF channel. Here, the card-swiping transaction not only means the electronic payment, but also means other communication process through other RF channel, for example charging, consumption and identity identification etc. The card-swiping transaction in the present invention broadly means to make communication through RF channel, especially means to make communication through RF channel in near field communication.

In the present invention, the frequencies of low frequency alternating magnetic signals is set in an extra low frequency band or a very low frequency band or a low frequency band, wherein, the extra low frequency band is in a range of 300Hz∼3000Hz, the very frequency band is in a range of 3 KHz ∼30 KHz, and the low frequency band is in a range of 30KHz∼300KHz. Preferably, the frequencies of the low frequency alternating magnetic signals can be 300 Hz∼50 KHz. Preferably, the frequencies of the low frequency alternating magnetic signals can be 500 Hz, 1 Khz, 1.5 KHz, 2 KHz, 2.5 KHz, 3 KHz, 4 KHz, 5 KHz, 10 KHz, 20 KHz or 30 KHz.

The near field communication method of the present invention adopts an one-way communication for the low frequency magnetic field combining with a two-way communication of the RF electrical magnetic field, thus avoiding problem caused by the antenna and other problems such as large attenuating difference for signals of the terminals caused by two-way communication at 13.56MHz frequency point and distance control in NFC system. In the method, unique identity IDr (namely the above identification information) of the card reader is transmitted to the mobile RF device through a low frequency one-way channel by the card reader, and then the unique identity IDc of the mobile RF device is attached to IDr through the RF two-way channel by the mobile RF device, then transmitted to the card reader; the card reader compares validity of the IDr, thereby achieving the unique binding between the card reader and the mobile RF device. After the binding, the card reader and the mobile RF device achieve communication with a large number of data by means of RF two-way channel, until the transaction is completed.

The near field communication method of the present invention achieves the data communication distance (also referred to as the transaction distance) between the RF communication distance provided with the mobile RF device and the card reader to be securely controlled in a determined range, and there is no need to calibrate the terminal.

In order to achieve the above near field communication method, the present invention also proposes a near field communication system. The near field communication system of the present invention comprises at least one card reader and at least one mobile RF device, in which:
the card reader transmits low frequency magnetic signals according to preset transmission parameters. Identification information of the card reader is carried in the low frequency alternating magnetic signals, wherein, the transmission parameters comprises frequencies of the low frequency alternating magnetic signals and the frequencies are less than or equal to the highest frequency f0 of the system at which the system needs not to be calibrated; the card reader also receives information transmitted through the RF channel by the mobile RF device; compares whether the identification information of the card reader in the above information is consistent with the identification information itself; if it is, the identification information itself is combined with the identification information of the mobile RF device to act as a combined address, thus performing card-swiping transaction with the mobile RF device through the RF channel;

Low frequency alternating magnetic signals transmitted by the card reader are received and detected by the mobile RF device on various distance points and are amplified to voltage signals having a constant amplitude value and corresponding to the distance, then it is determined whether the terminal equipped with the mobile RF device enters a preset effective distance range using a preset voltage threshold Vt, wherein the voltage threshold Vt is the same for all terminals equipped with the mobile RF device; the mobile RF device is used to acquire identification information of the card reader from the received low frequency alternating magnetic field information if the voltage signals corresponding to the received low frequency alternating magnetic signals are greater than or equal to the preset voltage threshold value Vt, and transmit the identification information together with the identification information itself to the card reader through the RF channel; the mobile RF device is used to perform card-swiping transaction with the card reader through the RF channel.

Wherein, the identification information may be identification code ID.

It can be known that, the card reader in the near field communication system of the present invention has the two basic functions, namely a low frequency transmission function and a RF transceiver function, in other words, the card reader in the near field communication system of the present invention has two basic modules, namely a low frequency transmitting module and a RF transceiver module; the mobile RF device in the near field communication system of the present invention has two basic functions, namely a low frequency receiver function and a RF transceiver function, in other words, the mobile RF device in the near field communication system of the present invention has two basic modules, namely a low frequency receiver module and a RF transceiver module.

Further, the near field communication system as above stated can be accomplished by the following circuits specially: the card reader comprises at least one low frequency transmission coil, at least one driver circuit, at least one encoding circuit, at least one first main processor, at least one RF transceiver circuit and at least one RF antenna; wherein, the low frequency transmission coil, the driver circuit, the encoding circuit, the first main processor, the RF transceiver circuit, the RF antenna are connected in series; the mobile RF device comprises at least one low frequency magnetic induction circuit, at least one low frequency amplification circuit, at least one threshold judgment and demodulation circuit, at least one second main processor, at least one RF transceiver circuit and at least one RF antenna; wherein the low frequency magnetic induction circuit, the low frequency amplification circuit, the threshold judgment and demodulation circuit, the second main processor, the RF transceiver circuit and the RF antenna are connected in series. Preferably, in the above implementing circuit, a modulation circuit is provided between the driver circuit and the encoding circuit of the card reader.

In the above implementing circuit, the low frequency transmission coil, the driver circuit and the encoding circuit (including the modulation circuit if the modulation circuit is provided) can be regarded as a part of the low frequency transmitting module. The first main processor, the RF transceiver and the RF antenna of the card reader can be regarded as a part of the RF transceiver module of the card reader; the low frequency magnetic induction circuit, the low frequency amplification circuit and the threshold judgment and demodulation circuit of the mobile RF device can be regarded as a part of the low frequency receiver module. The second main processor, the RF transceiver circuit and the RF antenna of the mobile RF device can be regarded as a part of the RF transceiver module in the mobile RF device.

Preferably, in the above implementing circuit, the low frequency transmission coils can be coils formed of enameled wires or PCB coils. Further, the turns of the low frequency transmission coils can be more than 10 turns. Preferably, the turns of the low frequency transmission coils can be 50∼500 turns. Preferably, the low frequency transmission coils can be filled with a ferrite magnetic core or an iron core. Preferably, the area enclosed by the low frequency transmission coils has a width in the widest section greater than the width of the section of the mobile RF terminal. Preferably, the section of the area enclosed by the low frequency coils comprises at least a circle region with a diameter of 3cm or a square region of 3cm*3cm.

Preferably, the above low frequency magnetic induction circuit can be PCB coils, coils made of enameled wires, a hall device or a giant magneto resistance device.

In the present invention, the mobile RF device can be disposed in the mobile terminal, or be disposed in a SIM card, a UIM card, a USIM card, a TF card or a SD card of the mobile terminal. Wherein, the mobile terminal can be a cell phone, a personal digital assistant or a notebook computer etc.

The principle of the near field communication system of the present invention will be described in detail in the following:
1. The method and device for selecting the highest frequency f0 for the system without calibration have been described in the above near field communication method, thereby it is unnecessary to give details;
2. The principle for distance measurement and control is as follows:
   The card reader continuously transmits periodically low frequency alternating magnetic signals of no greater than a selected frequency f0 at preset transmission parameters. The signals is in a format of a data frame in a modulation or a direct baseband transmission mode, the data frame comprising a unique identification code Idr (or other identification information of course) of the card reader. When the mobile terminal equipped with the mobile RF device is disposed around the card reader, the low frequency alternating magnetic signals penetrate the terminal into the mobile RF device thereof; the mobile RF device detects the magnetic signals at every distance point and the magnetic signals are amplified to the voltage signals with constant amplitudes and corresponding to the distance; when the voltage amplitude is less than the received voltage threshold value Vt preset in the card, it means that the terminal does not enter an effective distance region for swiping card, thereby the card is not permitted to be swiped; when the voltage amplitude is greater than the received voltage threshold value Vt preset in the card, it means that the terminal enters an effective region for swiping card which is preset in the card reader, and the low frequency receiver circuit (the low frequency magnetic induction circuit, the low frequency amplification circuit and the threshold judgment and demodulation circuit) in the mobile RF device initiates a decoding process, thereby obtaining the unique identity code IDr of the card reader. On the other hand, the voltage signals converted from the magnetic field in the mobile RF device have corresponding relation respectively to the distances between the card reader and the mobile RF device, the relation being determined by a voltage-distance variation curve. According to the corresponding relation, the distance between the mobile RF device and the card reader can be determined by the voltage, thereby the distance between the mobile terminal and the card reader can be determined indirectly. Settings of Vt and the transmission parameters are a one-time work. Once being set, it is unnecessary to be changed.
3. The process principle for the mobile RF device being accessed by the card reader:
   The process for the mobile RF device being accessed by the card reader mainly comprises the unique binding process between the card reader and the mobile RF device. As an example, the binding process is that, after the unique identification code IDr of the card reader from the low frequency signals is decoded by the mobile RF device, the identification code is transmitted to the second main processing module in the mobile RF device, and then the second main processing module transmits the unique identification code IDc of the mobile RF device together with the received IDr to the card reader via the RF transceiver module. After the card reader receives the returned codes (IDr, IDc) from the mobile RF device, the mobile RF device, through which the identification code IDc is determined to be valid, enables the identification code IDr to correctly return to the card reader, which is the unique communication terminal of the present transaction. Since the IDr encoding ensures identification codes of other card readers located around the card reader are different at that time, the mobile RF device with the identifcation code IDc ensures to establish a unique communication with the card reader with the identification code IDr. Thus, a unique binding can be achieved between the mobile RF device and the card reader, and the mobile RF device and the card reader can identify each other via the combined address (IDr, IDc). After binding, the RF channel is used in the communication process to perform interaction without error. After the mobile RF device has been accessed successfully, the distance control process is finished, and the subsequent transaction process can be performed through the RF channel until the transaction is finished.
4. Transaction process:
   a unique and reliable communication link is established between the card reader and the mobile RF device via the RF channel. On the basis of the link, the card reader and the mobile RF device can achieve identity identification required by a transaction or other processes required by other transactions. All these processes can be performed by the rapid RF channel. Since the implementation of the above process ensures access to be established in predetermined distance ranges, the whole transaction process is a near field communication process performed within a defined range.

The present invention will be further described through embodiments in the following.

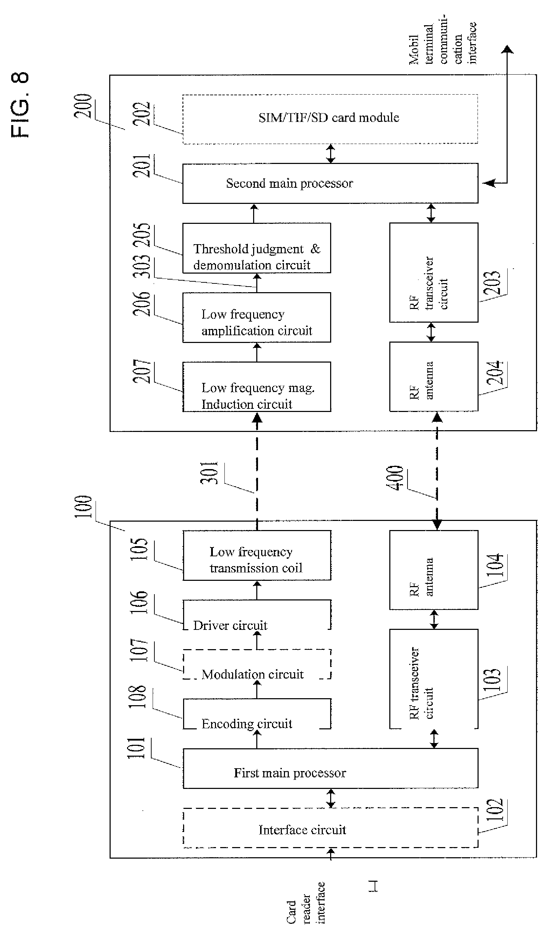

Fig. 8 is a structural diagram of the near field communication system according to the embodiment of the present invention. As shown in Fig. 8, the system includes two parts: the card reader device 100 and the mobile RF device 200. The mobile RF device 200 is disposed in the interior of the mobile terminal and interacts with the terminal through the mobile terminal communication interface.

The card reader 100 comprises the following modules: a first main processor 101, for controlling low frequency and high frequency for the card reader and other protocol process, the first main processor 101 being connected to an exterior communication interface through an interface circuit 102 or directly connected to the exterior communication interface; an encoding circuit 108, for encoding low frequency frame data bite by bite; an modulation circuit 107, for modulating a carrier using token streams which are output by encoding so as to form modulation signals for transmitting to the driver circuit 106, or directly transmitting the encoded signals to the driver circuit 106 without modulation; the driver circuit 106, for driving a low frequency transmission coil 105 to generate the low frequency alternating magnetic field 301; a RF transceiver circuit 103, receiving and transmitting RF signals through the RF antenna 104. The low frequency transmitting module comprises the low frequency transmission coil 105, the driver circuit 106, the modulation circuit 107 and the encoding circuit 108. The amplitude of the transmitting magnetic field of the module is preset and is adjustable. The low frequency transmission coil 105 comprises coils having more turns and of a special shape.

The mobile RF device is composed of the following modules: a second main processing module 201, for control of the low frequency and RF module and other protocol process, as well as a communication with the mobile terminal; SIM/TF/SD card module 202, acting as a body module of SIM/TF/SD card of the mobile terminal, the kind of the module being specially determined by the kind of the card; a low frequency magnetic induction circuit 207, comprising PCB coil, coils of enameled wires, Hall device or other circuit elements which can induce variation of the magnetic field, for inducing low frequency alternating magnetic signals 301 and converting it into electrical signals; a low frequency amplification circuit 206, for amplifying electrical signals detected by the low frequency magnetic induction circuit to obtain low frequency magnetic detecting voltage signals 303; a threshold judgment and demodulation circuit 205, for judging low frequency magnetic detection voltage signals 303 according to the preset threshold value Vt such that, if not reaching the threshold value Vt, demodulation being not performed and if reaching the threshold value Vt, demodulation being performed, in order that the demodulated signals are transmitted to the second main processor 201; the RF transceiver circuit 203, for performing two-way communication with the RF transceiver module of the card reader through the RF antenna 204.

The system realizes distance detection and control without calibration according to the preset threshold determining method. That is to say, the card reader 100 transmits low frequency alternating magnetic signals 301 according to the preset transmission parameters, and the mobile RF device 200 receives the magnetic signals to convert it into low frequency magnetic induction voltage signals 303, then determines whether the terminal enters a preset effective distance region by means of the preset threshold Vt which is the same for all terminals so that it is unnecessary to make amendment with regard to different terminals (namely so called calibration). The present invention achieves the only binding between the card reader 100 and the mobile RF device 200 by the method of combining low frequency one-way communication and RF two-way communication, namely the card reader 100 transmits its unique identification IDr to the mobile RF device 200 using the low frequency one-way channel, and the unique identification IDc of the card is appended to IDr by the mobile RF device 200 through the RF two-way channel, and then is transmitted back to the card reader 100. The card reader compares the validity of the retuned IDr, thereby achieving the unique binding between the card reader 100 and the mobile RF device 200. After binding, a high-speed two-way communication with a large number of data can be accomplished through the RF channel.

In the embodiment, the special working schedule of the near field communication system is as follows:
1. Firstly, selecting basic parameters for operation of the system, which comprise RF frequency point, the low frequency point f0 without calibration, the transmission parameters of the card reader and the receiver voltage threshold Vt of the mobile RF device.

### 1. The selection of the RF frequency point

The frequency point of the above RF communication generally uses the 2.4G ISM frequency band of 2400∼2483MHz, so as to achieve high-speed communication and excellent penetration performance to terminals. Other frequency points can also be used, for example 433 MHz, 900MHz, 5GHz etc.

### 2. The selection of the low frequency point f0 for the system without calibration

The low frequency point f0 of the system without calibration can be determined by the above method. For a typical GSM mobile communication terminal, a frequency point f0 is generally less than 10KHz, typically 500KHz, 1KHz, 1.5KHz, 2KHz, 2.5KHz, 3KHz, 5KHz etc., in order to achieve distance control within the range of 0-10cm.

### 3. The selection of the transmission parameters of the card reader

The transmission parameters mainly comprise the modulation mode, the encoding mode and the transmitting magnetic induction strength amplitude Br.

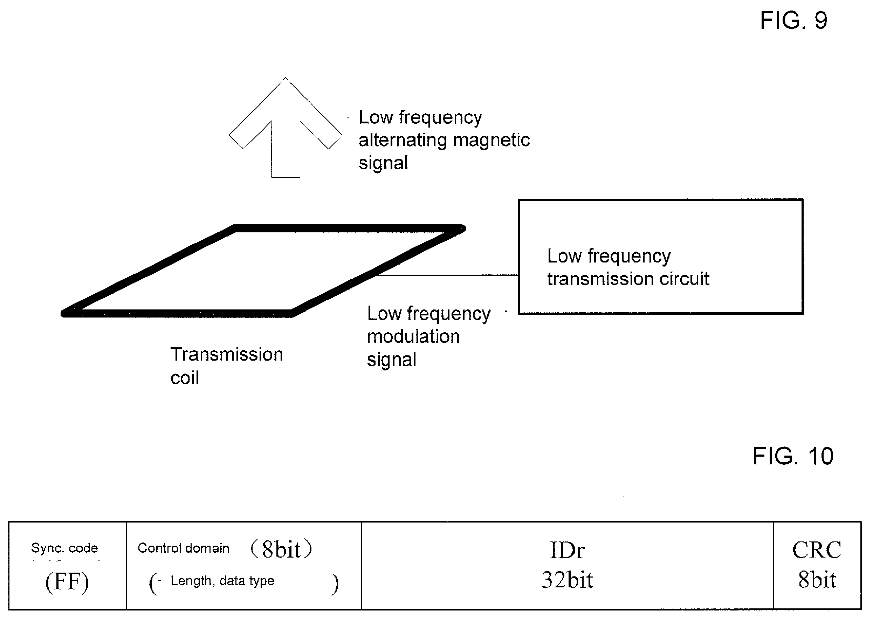

Fig. 9 is a diagram showing the low frequency transmitting part of the card reader. Referring to Fig. 8, the low frequency transmission circuit of the card reader comprises a driver circuit 106, a modulation circuit 107 and an encoding circuit 108. The low frequency modulation signals driven by the driver circuit 106 are output to the low frequency transmission coil 105.

The modulation circuit 107 can adopt several modulation modes:
1) The carrier modulation mode: the baseband signals generated by the encoding circuit 108 modulate the carrier via the modulation circuit 107. The carrier can be sine waves, square waves or triangular waves etc. The modulation mode can be the on-off frequency shift keying OOK, the phase shift keying, the frequency shift keying FSK etc. The modulated signals are loaded to the low frequency transmission coil 105 via the driver circuit 106;
2) The direct baseband transmission without a carrier: the baseband signals generated by the encoding circuit 108 are loaded to the low frequency transmission coil 105 directly via the driver circuit 106;
3) Other modulation modes: since the system of the present invention adopts the threshold judgment mode to perform distance control, the modulation mode is not suitable to adopt amplitude modulation. All modulation modes that can maintain the amplitude of the detection voltage in the mobile RF device to be constant during transmission can be used for the near field communication system of the present invention;

Several encoding modes can be used in the encoding circuit 108:
1) Manchester encoding: bite 1 is encoded to be two symbols 01, and bite 0 is encoded to be 10.
2) Differential Manchester encoding: there are two kinds of bite symbol sequences: 01 and 10; bite 1 is encoded to be different from the former symbol sequence while bite 0 is encoded to be the same as the former symbol sequence; or it is possible for them to be encoded in an opposite way to the above.
3) Other encoding modes: since the system of the present invention uses the threshold judgment mode to perform distance control, the average value of the low frequency modulation signals must be kept stable. The encoded sequences can not contain a direct component. The encoding modes in which average direct current components after encoding are zero all apply to the near field communication system of the present invention.

After determining the modulation mode and the encoding mode, the transmitting magnetic induction strength amplitude Br of the card reader can be determined by means of the above method. The process for adjusting Br is in fact a process of adjusting the turns of the coil, the diameter of the coil, the shape of the coil and other parameters.

### 4. The selection of the receiver voltage threshold Vt of the mobile RF device

The receiver voltage threshold Vt can be determined by means of the above method.

The selection of the above parameters is a one-time work. Once selection, there is no need to be changed.

II. Secondly, the following is the operating schedule of the system after the operating parameters are determined.

Step A100: the distance measurement and control process. The first main processor 101 of the card reader 100 generates the data frame containing unique identification code IDr of the card reader, which is transmitted to the encoding circuit 108 to enable encode. The encoded signals are modulated by the modulation circuit 107 or directly transmitted to the driver circuit 106 without modulation. The modulation voltage is transmitted by the low frequency transmission coil 105, and according to the preset frame format, the modulation encoding mode and the driving capability, the transmission coil 105 continuously and periodically transmits the low frequency alternating magnetic signals 301 with the preset parameters at preset strength Br according to the above frame format. When the mobile terminal is disposed around the card reader, the low frequency alternating magnetic signals 301 penetrate the terminal into the internal mobile RF device 200. The low frequency magnetic induction circuit 207 disposed in the mobile RF device 200 detects low frequency magnetic signals. After the magnetic signals are converted into electrical signals, the electrical signals are amplified by the low frequency amplification circuit 206 to generate a low frequency magnetic detection voltage 303. When the voltage amplitude is lower than (or higher than) the preset receiver voltage threshold value Vt, it is not permitted to swipe card; when the voltage amplitude is higher than or equal to (alternatively, lower than or equal to) the preset receiver voltage threshold value Vt, it means that the terminal enters the preset effective card-swiping range for the card reader. The low frequency receiver circuit initiates decoding process to obtain the unique identification code IDr of the card reader. On the other hand, the voltage signals converted by the magnetic field in the mobile RF device have a corresponding relation respectively to the distance between the card reader and the mobile RF device, the relation being determined by voltage-distance variation curve. According to the corresponding relation, the distance between the mobile RF device and the card reader can be determined by the voltage, thereby the distance between the mobile terminal and the card reader can be determined indirectly The above threshold value Vt is the same for all terminals, without the need to make adjustment for every terminal, i.e. without the need to be calibrated, thereby the above process is a distance measurement and control process without calibration.

The frame format in step A100 can be defined as follows:
Fig. 10 is a diagram of low frequency data frame format of the card reader. As shown in Fig. 10, every frame of the low frequency data frames for the card reader can be divided into the following domain:
   Asynchronous code: 8 bites, usually FFH, for frame synchronization;
   Control domain: 8 bites, for recovering the data from the frame data, for example length, data type, etc., reserved bit being reserved for extension;
   IDr: N bites, the unique identification code of the card reader, designated by the control domain;
   CRC: for checking the control domain and IDr, using CRC check or other mode.
      The above frame format is described as an example, and is not intended to limit the frame format used by the present invention in practice. In principle, the present invention can use any frame format which can identify a card reader uniquely The unique identification code can use a random number with sufficient length. Or unique identification code can be distributed by all card readers manually, and other identification code generated in other way can also used.

Step A200: the process of the mobile RF device accessing to the card reader: the process of the mobile RF device accessing to the card reader mainly comprises the process of the unique binding between the card reader 100 and the mobile RF device 200, and in fact, it indicates the process of the unique binding between the card reader and the mobile terminal provided with the mobile RF device. After the unique identification code Idr of the card reader is decoded by the low frequency receiver circuit of the mobile RF device 200, the identification code is transmitted to the first main processor 201 of the mobile RF device. The first main processor transmits the unique identification code Idc of the mobile RF device itself together with the received Idr to the card reader 100 via the transceiver circuit 203 and the RF antenna 204 of the mobile RF device. After the RF antenna and the RF transceiver 104 in the card reader receive the returned code (IDr, IDc) from the mobile RF device, the returned code is transmitted to the first main processor 101 to be processed. The first main processor 101 confirms that IDr is returned to the card reader by the mobile RF device with identification code IDc, which is the unique communication terminal of the present transaction. Since the encoding for IDr ensures that identification codes of other card readers located around the card reader are different at that time, the card with the identification code IDc guarantees to establish the unique communication with the card reader containing the identification code IDr. Thus, the unique binding between the mobile RF device and the card reader is realized, so that the mobile RF device and the card reader can identify each other by means of the combined address (IDr, IDc). After binding, the communication process uses the RF channel to perform interaction without error. After the mobile RF device is successfully accessed to the card reader, the distance control process is implemented and the subsequent transaction process can be performed through the RF channel.

The unique identification code IDc of the mobile RF device in step A200 is the unique identification code previously stored in the nonvolatile memory (NVM) of the mobile RF device, or is a random number with a sufficient length which is generated in the mobile RF device.

Step A300: the transaction process. A unique and reliable communication link is established between the card reader 100 and the mobile RF device 200 via the RF channel. On the basis of the link, the card reader and the mobile RF device can realize identity identification required by a transaction or other process required by other transaction. All these processes can be performed by the rapid RF channel until the transaction is finished. Since the implementation of the above processes A100-A200 ensures the mobile RF device 200 to be accessed to in predetermined distance ranges, the whole transaction process is a process performed only within a defined range. The transaction process is a developed processing schedule for a POS machine, and the present invention does not give more details.

The low frequency signal detection circuit 207 of the mobile RF device 200 usually comprise PCB coil, coils made of enameled wires or Hall devices. The detection circuit is not limited to these elements. In principle, any sensor which can converts variation of magnetic field into electrical signals can be used to the module as long as the sensor can be disposed into the card.

The system of the present invention can perform distance detection and control by using low frequency alternating magnetic field, and realize the one-way communication between the card reader and the mobile RF device. Moreover, the binding for the terminal can be reliably realized via the RF channel in combination with the low frequency communication mode. Meanwhile, a high-speed data communication between the card reader and the mobile RF device can be achieved via the RF channel. It has the following characteristics: 1. it is unnecessary to transform the mobile terminal, and only the SIM card/TF card/SD card in the interior of the terminal needs to be replaced to reliably realize the two-way communication; 2. the card reader transmits the low frequency alternating magnetic signal, and the mobile RF device only needs to receive the magnetic signals; since it is one-way communication without the need to provide energy through the magnetic field by the card reader, the receiver coil and other receiver circuit can be minimized, so that the mobile RF device can be provided in the SIM card/TF/SD card; 3. since the received signals are weak, an amplification circuit needs to be provided in the mobile RF device. In addition, the RF transceiver circuit is also provided in the mobile RF device to carry out the two-way communication with the RF transceiver circuit provided in the card reader. As stated above, the antenna of the RF circuit is so small as to be integrated easily into the SIM card/TF/SD card.

The frequency point f0 can be selected according to the method of the present invention. If the system operates at a frequency of lower than f0, there is no need to carry out calibration. As an extension, it is not absolutely impossible to operate for the system even if working at a frequency of higher than f0. A possible effect is that the performance of the system is diminished and the accuracy degree for the distance control is lowered, meanwhile simple calibration may be required additionally. These applications are not in contradiction with the principles of the invention essentially, only as an extending application with changed capabilities.

The near field communication system of the present invention realizes the data communication distance (also referred to as transaction distance) between the RF communication terminal including the mobile RF device (for example the cell phone provided with the RF SIM card) and the card reader to be reliably controlled within a given range without the need to calibrate the terminal.

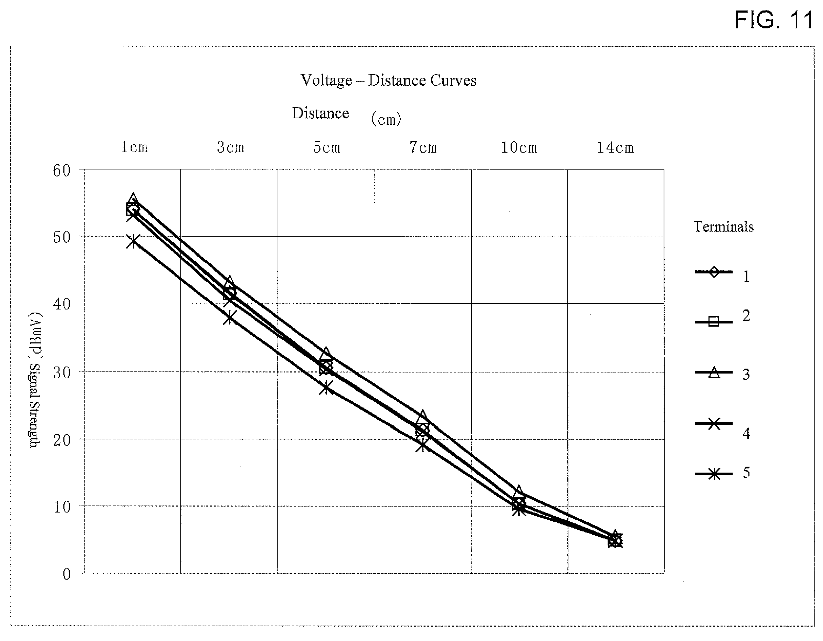

According to the system and the method of the present invention, the highest frequency point f0 can be appropriately selected for the system without calibration. If a low frequency alternating magnetic field at the frequency of less than f0 is used for the distance measurement and control, influence of difference between the structures of the mobile terminals can be reduced to within the fluctuation range required for the distance control target value, so as to realize the distance control without calibration. Fig. 11 is a voltage-distance curve detected in the condition that a signal source transmits a constant magnetic field of 1 KHz via a low frequency transmission coil when the coil receiver circuit is placed into various mobile terminals. As shown in Fig. 11, it shows an example of voltage-distance curves for several typical terminals of the system at the frequency of 1 KHz, in which the signal strength value is a value obtained after the induction voltage for the receiver antenna is amplified necessarily Since the amplification factor maintains constant, an attention is only paid to the relative variation of the strength value with the distance. It can be seen from Fig. 11 that, the difference between the field strength for different terminals is less than 5dB, while the variation range between the field strength for various terminals in a distance range of 1-10cm is up to 40dB. Taking no account of strength fluctuation of the transmitting field of the card reader and errors of the detection circuit of the mobile RF device, the mobile RF device uses the same threshold value Vt to determine whether various terminals are placed within a target distance scope, and for various terminals, the difference of errors of distance control is in a range of about 1cm, thereby fully satisfying the requirement for distance control without calibration.

The above mentioned are only preferred embodiments of the present invention, and can not be used to limit the invention. Any amendments, equivalent replacement, improvement and so forth that are made within the scope and principle of the present invention should fall within the protection scope of the present invention.

## Claims

1. A near field communication method, for a near field communication system comprising at least one card reader (100) and at least one mobile terminal (501) equipped with a RF device (200), **characterized in that** the method comprises the following steps:
step a, the card reader (100) transmits low frequency alternating magnetic signals (301) according to preset transmission parameters, the low frequency alternating magnetic signals (301) carrying identification information of the card reader (100), the transmission parameters comprising a frequency for the low frequency alternating magnetic signal (301) which is equal to or less than the highest working frequency f0 of the system at which the system needs not to be calibrated;
step b, the RF device (200) receives and detects the low frequency alternating magnetic signals (301) on every distance point and amplifies them to voltage signals with constant amplitudes and corresponding to the distances, and thus determines whether the terminal (501) equipped with the RF device (200) enters a preset effective distance range using a preset voltage threshold Vt, wherein the voltage threshold Vt is the same for all terminals (501) equipped with the RF device (200);
step c, if the voltage corresponding to the received low frequency alternating magnetic signals (301) is greater than or equal to the preset voltage threshold Vt, the terminal (501) equipped with the RF device (200) enters a preset effective range for swiping card, then the RF device (200) acquires the identification information of the card reader (100) from the received low frequency magnetic signals, and transmit it together with its own identification information to the card reader (100) through the RF channel;
step d, the card reader (100) receives an information transmitted through the RF channel by the RF device (200), compares whether the identification information of the card reader (100) in the above information is consistent with its own identification information; if it is, its own identification information is combined with the identification information of the RF device (200) to act as a combined address, thus performing swiping transaction with the RF device (200) through the RF channel.

2. The near field communication method according to claim 1, **characterized in that** in said step a, the highest frequency f0 for operation of the system without calibration is determined by the following steps:
step a1, determining distance control target values (Din, Dv) for the system, wherein Din indicates that all terminals (501) equipped with the RF device (200) are ensured to be swiped in the range of 0 ∼ Din, Dv indicates a distance fluctuating range, thereby the card being able to be swiped in the range of Din ∼ (Din+ Dv), and being not able to be swiped beyond the range of Din + Dv;
step a2, determining a fluctuating range δ_{R} of the detected voltage or signal strength (dBmV) for the RF device caused by the card reader (100);
step a3, determining a fluctuating range δ_{C} of the detected voltage caused by the RF device (200) itself;
step a4, detecting the voltage-distance curve for various typical terminals (501) and obstacles at the frequency of f;
step a5, determining the fluctuating range δ_{A} of the detected voltage or signal strength (dBmV) for the RF device (200) according to the distance control target value (Din, Dv), wherein δ_{A} is equal to a voltage difference between the voltage corresponding to the point Din and the voltage corresponding to the point (Din + Dv) in the voltage-distance curve with an average field strength attenuation curve gradient obtained from respective voltage-distance curves for typical· terminals and obstacles;
step a6, determining a fluctuating range δ_{T} of the detected voltage or signal strength (dBmV) for the RF device (200) caused by the terminal, wherein δ_{T} indicates the fluctuating range of the detected voltage or signal strength (dBmV) for the RF device (200) caused by attenuating characteristic of the terminal, δ_{T} = δ_{A} - δ_{R} - δ_{C};
step a7, obtaining the largest field strength difference δ between various typical terminals and obstacles on different distance points within the distance control range; If δ is greater than δ_{T}, the frequency f is lowered and the method returns to step a4; if δ is less than δ_{T}, the frequency f is increased and the method returns to step a4; and if δ is equal to δ_{T}, the current detecting frequency f is equal to the highest working frequency f0 of the system without calibration.

3. The near field communication method according to claim 2, **characterized in that** in said step a, the transmission parameters comprise a modulation mode, an encoding mode and a transmitting magnetic induction strength amplitude Br, wherein the modulation mode, the encoding mode and the transmitting magnetic induction strength amplitude Br are determined by means of the following steps: selecting any one of encoding mode without a direct current component; selecting no modulation mode or an amplitude-invariable carrier modulation mode; after selecting a working frequency less than f0, a modulation mode and an encoding mode, firstly selecting a typical noise terminal and gain parameters for the magnetic detection and amplification in the RF device (200) which is easily realized, detecting an intrinsic noise voltage amplitude Vn for the detected voltage or signal strength (dBmV) in the RF device (200) in the condition of the low frequency magnetic signals being not transmitted by the card reader (100), then measuring a detected voltage or signal strength (dBmV) Vr of the RF device (200) when the card reader (100) transmits the low frequency alternating magnetic signals (301) using the selected modulation and encoding mode, and selecting a transmitting magnetic induction strength amplitude Br to meet Vr/Vn>SNR, in which SNR is a signal to noise ratio of the RF device (200).

4. The near field communication method according to claim 3, **characterized in that** in said step b, the preset voltage threshold Vt is determined by the following steps:
step b1, at the selected transmission parameters, measuring a voltage-distance curve for various typical terminals and obstacles, wherein the transmission parameter comprises the frequency of the low frequency alternating magnetic signals (301), the modulation mode, the encoding mode and the transmitting magnetic induction strength amplitude Br;
step b2, obtaining a reference voltage-distance curve, wherein the reference voltage-distance curve is the average value obtained from the voltage-distance curves for the typical terminals and obstacles, which has the same voltage amplitude difference δ_{T}/2 from the upper bound and the lower bound of the typical terminal curves;
step b3, selecting a detected voltage or signal strength (dBmV) threshold Vt for the RF device (200), the voltage corresponding to the point (Din+Dv/2) being Vt on the reference voltage-distance curve.

5. The near field communication method according to claim 3, **characterized in that** the frequency of the low frequency alternating magnetic signals (301) is set in an extra low frequency band or a very low frequency band or a low frequency band, wherein the extra low frequency band is in a frequency range of 300 Hz∼3000 Hz, the very low frequency band is in a frequency range of 3 KHz∼30 KHz, and the low frequency band is in a frequency range of 30 KHz∼300 KHz.

6. The near field communication method according to claim 5, **characterized in that** the frequency of the low frequency alternating magnetic signals (301) is 300Hz∼50KHz, in particular wherein the frequency of the low frequency alternating magnetic signals (301) is 500 Hz, 1 KHz, 1.5 KHz, 2 KHz, 2.5 KHz, 3 KHz, 4 KHz, 5 KHz, 10 KHz, 20 KHz or 30 KHz.

7. The near field communication method according to claim 3, **characterized in that** the encoding mode is Manchester code, differential Manchester code, or return to zero code; and the modulation mode is on-off keying, phase shift keying or frequency shift keying.

8. A near field communication system, **characterized in that** the system comprises at least one card reader (100) and at least one mobile terminal (501) equipped with an RF device (200),
wherein: the card reader (100) is used for transmitting low frequency alternating magnetic signals (301) according to preset transmission parameters, the low frequency alternating magnetic signals (301) carrying an identification information of the card reader (100), in which the transmission parameters comprise frequency of the low frequency alternating magnetic signals (301) which is the same as or less than the highest working frequency of the system at which the system needs not to be calibrated; the card reader (100) is also used for receiving information transmitted through the RF channel by the RF device (200), and for comparing whether the identification information of the card reader (100) in the above information is consistent with its own identification information if it is, its own identification information being combined with the identification information of the RF device (200) to act as a combined address, thus performing swiping transaction with the RF device (200) through the RF channel;
the RF device (200) is used for receiving and detecting the low frequency alternating magnetic signals (301) on every distance point and amplifying it to voltage signals with constant amplitudes and corresponding to the distances, thereby determining whether the terminal equipped with the RF device (200) enters a preset effective distance range using a preset voltage threshold Vt, wherein the voltage threshold Vt is the same for all terminals equipped with the RF device (200); if the voltage signals corresponding to the received low frequency alternating magnetic signals (301) are greater than or equal to the preset voltage threshold Vt, the RF device (200) is used for acquiring the identification information of the card reader (100) from the received low frequency magnetic signals, and transmitting it together with its own identification information to the card reader (100) through the RF channel; the RF device (200) is further used for performing swiping transaction with the card reader (100) through the RF channel.

9. The near field communication system according to claim 8, **characterized in that** the card reader (100) comprises at least one low frequency transmission coil (504, 105), at least one driver circuit (106), at least one encoding circuit (108), at least one first main processor (101), at least one RF transceiver circuit (103) and at least one RF antenna (104), wherein the low frequency transmission coil (504, 105), the driver circuit (106), the encoding circuit (108), the first main processor (101), the RF transceiver circuit (103), the RF antenna (104) are connected in series; the RF device (200) comprises at least one low frequency magnetic induction circuit (207), at least one low frequency amplification circuit (206), at least one threshold judgment and demodulation circuit (205), at least one second main processor (201), at least one RF transceiver circuit (203) and at least one RF antenna (204), wherein the low frequency magnetic induction circuit (207), the low frequency amplification circuit (206), the threshold judgment and demodulation circuit (205), the second main processor (201), the RF transceiver circuit (203) and the RF antenna (204) are connected in series.

10. The near field communication system according to claim 9, **characterized in that** a modulation circuit (107) is provided between the driver circuit (106) and the encoding circuit (108) of the card reader (100).

11. The near field communication system according to claim 9 or claim 10, **characterized in that** the low frequency transmission coils (504, 105) are coils formed of enameled wires or PCB coils, in particular wherein the turns of the low frequency transmission coils (504, 105) are more than 10 turns, preferably wherein the turns of the low frequency transmission coils (504, 105) are 50-500 turns, and/or wherein the low frequency transmission coils (504, 105) are filled with ferrite magnetic cores or iron cores.

12. The near field communication system according to claim 11, **characterized in that** an area enclosed by the low frequency transmission coils (504, 105) has a width in the widest section which is greater than the width of the section of the RF device.

13. The near field communication system according to claim 11, **characterized in that** the section of the area enclosed by the low frequency transmission coils (504, 105) comprises at least a circle region with a diameter of 3cm or a square region of 3cmx3cm.

14. The near field communication system according to claim 8, **characterized in that** the RF device (200) is disposed in the RF device, or **in that** the RF device (200) is disposed in a SIM card, a UIM card, a USIM card, a TF card or a SD card of the RF device.

15. The near field communication system according to claim 8, characterized m that the identification information is identification codes.

## Patentansprüche

1. Eine Methode der Nahfeldkommunikation für ein Nahfeldkommunikationssystem, das aus mindestens einem Kartenlesegerät (100) und mindestens einem mobilen Endgerät (501), das mit einem HF-Gerät (200) ausgestattet ist, besteht, **dadurch gekennzeichnet, dass** die Methode folgende Schritte umfasst:
Schritt a) das Kartenlesegerät (100) überträgt niederfrequente, magnetische Wechselsignale (301) entsprechend voreingestellter Übertragungsparameter, wobei die niederfrequenten, magnetischen Wechselsignale (301) Informationen zur Identifizierung des Kartenlesegeräts (100) enthalten, die Übertragungsparameter eine Frequenz für das niederfrequente, magnetische Wechselsignal (301) aufweist, die gleich oder niedriger als die höchste Arbeitsfrequenz f0 des Systems ist, bei der das System nicht kalibriert zu werden braucht;
Schritt b) das HF-Gerät (200) empfängt und erkennt die niederfrequenten, magnetischen Wechselsignale (301) an jedem Distanzpunkt und verstärkt sie zu Spannungssignalen mit gleichbleibenden Amplituden und entsprechend der Distanzen, wodurch es festlegt, ob auf mit dem HF-Gerät (200) ausgestatteten Endgerät (501) mittels einer voreingestellten Spannungsschwelle Vt eine voreingestellte Wirkungsdistanzreichweite in Kraft tritt, wobei die Spannungsschwelle Vt für alle mit dem HF-Gerät (200) ausgestatteten Endgeräte (501) gleich ist;
Schritt c) wenn die Spannung entsprechend der empfangenen niederfrequenten, magnetischen Wechselsignale (301) höher oder gleich der voreingestellten Spannungsschwelle Vt ist, tritt auf dem mit dem HF-Gerät (200) ausgestatteten Endgerät (501) eine voreingestellte Wirkungsreichweite zum Einlesen einer Karte in Kraft, woraufhin das HF-Gerät (200) die Information zur Identifizierung des Kartenlesegeräts (100) von den empfangenen niederfrequenten, magnetischen Signalen bezieht und sie zusammen mit seinen eigenen Information zur Identifizierung über den HF-Kanal an das Kartenlesegerät (100) sendet;
Schritt d) das Kartenlesegerät (100) empfängt eine Information vom HF-Gerät (200) über den HF-Kanal und vergleicht, ob die Information zur Identifizierung des Kartenlesegeräts (100) in der obigen Information mit seiner eigenen Information zur Identifizierung übereinstimmt; ist dies der Fall, wird seine eigene Information zur Identifizierung mit den Informationen zur Identifizierung des HF-Geräts (200) kombiniert, um als kombinierte Adresse zu fungieren, demzufolge eine Transaktion durch Einlesen der Karte mit dem HF-Gerät (200) über den HF-Kanal stattfindet.

2. Die Methode der Nahfeldkommunikation nach Anspruch 1, **dadurch gekennzeichnet, dass** im erwähnten Schritt a) die höchste Frequenz f0 für den Betrieb des Systems ohne Kalibrierung mittels folgender Schritte bestimmt wird:
Schritt a1) es werden die Zielwerte zur Distanzkontrolle (Din, Dv) für das System festgelegt, wobei Din kenntlich macht, dass alle mit dem HF-Gerät (200) ausgestatteten Endgeräte (501) garantiert eine Karte im Bereich 0 ∼ Din einlesen werden, Dv einen fluktuierenden Distanzbereich kenntlich macht, damit die Karte im Bereich Din - (Din + Dv) und nicht über den Bereich Din + Dv hinaus eingelesen werden kann;
Schritt a2) es wird ein vom Kartenlesegerät (100) verursachter fluktuierender Bereich δ_{R} der erkannten Spannung oder Signalstärke (dBmV) für das Frequenzgerät festgelegt;
Schritt a3), es wird ein vom HF-Gerät (200) selbst verursachter fluktuierender Bereich δ_{C} der erkannten Spannung festgelegt;
Schritt a4) es wird die Spannungs-Distanzkurve für verschiedenartige, typische Endgeräte (501) und Hindernisse bei der Frequenz von f erkannt;
Schritt a5) es wird der fluktuierende Bereich δ_{A} der erkannten Spannung oder Signalstärke (dBmV) für das HF-Gerät (200) entsprechend dem Zielwert zur Distanzkontrolle (Din, Dv) festgelegt, wobei δ_{A} gleich einem Spannungsunterschied zwischen der Spannung entsprechend dem Punkt Din und der Spannung entsprechend dem Punkt (Din+Dv) in der Spannungs-Distanzkurve mit einem Dämpfungskurvengradienten mittlerer Feldstärke ist, der von den jeweiligen Spannungs-Distanzkurven für typische Endgeräte und Hindernisse bezogen wurde;
Schritt a6) es wird ein vom Endgerät verursachter fluktuierender Bereich δ_{T} der erkannten Spannung oder Signalstärke (dBmV) für das HF-Gerät (200) festgelegt, wobei δ_{T} den fluktuierenden Bereich der erkannten Spannung oder Signalstärke (dBmV) für das HF-Gerät (200) kenntlich macht, der von der dämpfenden Eigenschaft des Endgeräts herrührt, δ_{T} =δ_{A} - δ_{R} -δ_{C};
Schritt a7) es wird die größte Feldstärkendifferenz δ zwischen verschiedenartigen typischen Endgeräten und Hindernissen an unterschiedlichen Distanzpunkten innerhalb des Distanzkontrollbereichs bezogen; ist δ größer als δ_{T}, wird die Frequenz f herabgesetzt und es wird sich Schritt a4) zugewendet; ist δ niedriger als δ_{T}, wird die Frequenz f heraufgesetzt und das Verfahren kehrt zu Schritt a4) zurück; und ist δ gleich δ_{T}, ist die aktuelle Erkennungsfrequenz f gleich der höchsten Arbeitsfrequenz f0 des Systems ohne Kalibrierung.

3. Die Methode der Nahfeldkommunikation nach Anspruch 2, **dadurch gekennzeichnet, dass** im erwähnten Schritt a) die Übertragungsparameter einen Modulationsmodus, einen Kodierungsmodus sowie eine Übertragungsamplitude der magnetischen Induktionsstärke Br beinhalten, wobei der Modulationsmodus, der Kodierungsmodus sowie die Übertragungsamplitude der magnetischen Induktionsstärke Br mittels folgender Schritte bestimmt werden:
Wahl eines Kodierungsmodus ohne eine Gleichstromkomponente;
Wahl keines Modulationmodus oder eines Trägermodulationsmodus mit gleichbleibender Amplitude;
Nach Wahl einer Arbeitsfrequenz niedriger als f0, eines Modulationsmodus und eines Kodierungsmodus zunächst Wahl von atypischen, rauschbegrenzenden und -verstärkenden Parametern für die magnetische Erkennung und Verstärkung im HF-Gerät (200), was einfach zu realisieren ist, Erkennung einer Spannungsamplitude des systeminternen Rauschens Vn für die erkannte Spannung oder Signalstärke (dBmV) im HF-Gerät (200), bei dem die niederfrequenten, magnetischen Signale nicht vom Kartenlesegerät (100) übertragen werden, gefolgt von der Messung einer erkannten Spannung oder Signalstärke (dBmV) Vr des HF-Geräts (200), wenn das Kartenlesegerät (100) die niederfrequenten, magnetischen Wechselsignale (301) mit dem gewählten Modulations- und Kodierungsmodus überträgt, und Wahl einer Übertragungsamplitude der magnetischen Induktionsstärke Br zur Erfüllung von Vr/Vn>SNR, wobei es sich bei SNR um ein Signal-Rausch-Verhältnis des HF-Geräts (200) handelt.

4. Die Methode der Nahfeldkommunikation nach Anspruch 3, **dadurch gekennzeichnet, dass** im erwähnten Schritt b) die voreingestellte Spannungsschwelle Vt mittels folgender Schritte bestimmt wird:
Schritt b1) an den gewählten Übertragungsparametern wird eine Spannungs-Distanzkurve für verschiedenartige typische Endgeräte und Hindernisse gemessen, wobei der Übertragungsparameter die Frequenz der niederfrequenten, magnetischen Wechselsignale (301), den Modulationsmodus, den Kodierungsmodus und die Übertragungsamplitude der magnetischen Induktionsstärke Br beinhaltet;
Schritt b2) es wird eine Spannungs-Distanzreferenzkurve bezogen, wobei die Spannungs-Distanzreferenzkurve der Mittelwert der Spannungs-Distanzreferenzkurven ist, die für die typischen Endgeräte und Hindernisse bezogen wurden, die dieselbe Differenz der Spannungsamplitude δ_{T}/2 zwischen de typischen Endgerätekurven aufweisen;
Schritt b3) es wird eine Schwelle Vt der erkannten Spannung oder Signalstärke (dBmV) für das HF-Gerät (200) gewählt, wobei die Spannung dem Punkt (Din+Dv/2) entspricht, der Vt auf der Spannungs-Distanzreferenzkurve ist.

5. Die Methode der Nahfeldkommunikation nach Anspruch 3, **dadurch gekennzeichnet, dass** die Frequenz der niederfrequenten, magnetischen Wechselsignale (301) in einem extra niedrigen Frequenzband oder einem sehr niedrigen Frequenzband oder einem niedrigen Frequenzband eingestellt ist, wobei das extra niedrige Frequenzband in dem Frequenzbereich 300 Hz-3000 Hz liegt, das sehr niedrige Frequenzband in dem Frequenzbereich 3 KHz-30 KHz liegt und das niedrige Frequenzband in dem Frequenzbereich 30 KHz-300 KHz liegt.

6. Die Methode der Nahfeldkommunikation nach Anspruch 5, **dadurch gekennzeichnet, dass** die Frequenz der niederfrequenten, magnetischen Wechselsignale (301) 300 Hz∼50 KHz beträgt, wobei insbesondere die Frequenz der niederfrequenten, magnetischen Wechselsignale (301) 500 Hz, 1 KHz, 1,5 KHz, 2 KHz, 2,5 KHz, 3 KHz, 4 KHz, 5 KHz, 10 KHz, 20 KHz oder 30 KHz beträgt.

7. Die Methode der Nahfeldkommunikation nach Anspruch 3, **dadurch gekennzeichnet, dass** der Kodierungsmodus ein Manchester-Code, ein Manchester-Differenzialcode oder ein Return-to-Zero-Code ist; und der Modulationsmodus eine Amplitudenumtastung, Phasenumtastung oder Frequenzumtastung ist.

8. Ein Nahfeldkommunikationssystem, **dadurch gekennzeichnet, dass** das System aus mindestens einem Kartenlesegerät (100) und mindestens einem Endgerät (501), das mit einem HF-Gerät (200) ausgestattet ist, besteht, wobei:
das Kartenlesegerät (100) zur Übertragung von niederfrequenten, magnetischen Wechselsignalen (301) nach voreingestellten Übertragungsparametern dient, die niederfrequenten, magnetischen Wechselsignalen (301) eine Information zur Identifizierung des Kartenlesegeräts (100) enthalten, wobei die Übertragungsparameter die Frequenz der niederfrequenten, magnetischen Wechselsignale (301) beinhalten, die gleich oder niedriger als die höchste Arbeitsfrequenz des Systems ist, bei der das System nicht kalibriert zu werden braucht; das Kartenlesegerät (100) wird auch für den Empfang von Informationen verwendet, die vom HF-Gerät (200) über den HF-Kanal übertragen werden, sowie für den Vergleich, ob die Informationen zur Identifizierung des Kartenlesegeräts (100) in den obigen Informationen mit seiner eigenen Information zur Identifizierung übereinstimmt; ist dies der Fall, wird seine eigene Information zur Identifizierung mit den Informationen zur Identifizierung des HF-Geräts (200) kombiniert, um als kombinierte Adresse zu fungieren, demzufolge eine Transaktion durch Einlesen der Karte mit dem HF-Gerät (200) über den HF-Kanal stattfindet;
das HF-Gerät (200) für den Empfang und zur Erkennung der niederfrequenten, magnetischen Wechselsignale (301) an jedem Distanzpunkt und zu ihrer Verstärkung zu Spannungssignalen mit gleichbleibenden Amplituden und entsprechend zu den Distanzen dient, wodurch festgelegt wird, ob auf dem mit dem HF-Gerät (200) ausgestatteten Endgerät mittels einer voreingestellten Spannungsschwelle Vt eine voreingestellte Wirkungsdistanzreichweite in Kraft tritt, wobei die Spannungsschwelle Vt für alle mit dem HF-Gerät (200) ausgestatteten Endgeräte gleich ist; wenn die Spannung entsprechend der empfangenen niederfrequenten, magnetischen Wechselsignale (301) höher oder gleich der voreingestellten Spannungsschwelle Vt ist, wird mit dem HF-Gerät (200) die Information zur Identifizierung des Kartenlesegeräts (100) von den empfangenen niederfrequenten, magnetischen Signalen bezogen und sie zusammen mit seiner eigenen Information zur Identifizierung über den HF-Kanal an das Kartenlesegerät (100) gesendet; zudem findet eine Transaktion durch Einlesen der Karte im Kartenlesegerät (100) mit dem HF-Gerät (200) über den HF-Kanal statt.

9. Das Nahfeldkommunikationssystem nach Anspruch 8, **dadurch gekennzeichnet, dass** das Kartenlesegerät (100) aus mindestens einer niederfrequenten Übertragungsspule (504, 105), mindestens einer Treiberschaltung (106), mindestens einer Kodierungsschaltung (108), mindestens einem ersten Hauptprozessor (101), mindestens einer HF-Sende-Empfangsgerätschaltung (103) und mindestens einer HF-Antenne (104) besteht, wobei die niederfrequente Übertragungsspule (504, 105), die Treiberschaltung (106), die Kodierungsschaltung (108), der erste Hauptprozessor (101), die HF-Sende-Empfangsgerätschaltung (103), die HF-Antenne (104) in Reihe geschaltet sind;
das HF-Gerät (200) aus mindestens einer niederfrequenten, magnetischen Induktionsschaltung (207), mindestens einer niederfrequenten Frequenzverstärkungsschaltung (206), mindestens einer Grenzwertbeurteilungs- und Demodulationsschaltung (205), mindestens einem zweiten Hauptprozessor (201), mindestens einer HF-Sende-Empfangsgerätschaltung (203) und mindestens einer HF-Antenne (204) besteht, wobei die niederfrequente, magnetische Induktionsschaltung (207), die niederfrequente Frequenzverstärkungsschaltung (206), die Grenzwertbeurteilungs- und Demodulationsschaltung (205), der zweite Hauptprozessor (201), die HF-Sende-Empfangsgerätschaltung (203) und die HF-Antenne (204) in Reihe geschaltet sind.

10. Das Nahfeldkommunikationssystem nach Anspruch 9, **dadurch gekennzeichnet, dass** eine Modulationsschaltung (107) zwischen der Treiberschaltung (106) und der Kodierungsschaltung (108) des Kartenlesegeräts (100) vorgesehen ist.

11. Das Nahfeldkommunikationssystem nach Anspruch 9 oder Anspruch 10, **dadurch gekennzeichnet, dass** es sich bei den niederfrequenten Übertragungsspulen (504, 105) um Spulen handelt, die aus Lackdrähten oder PCB-Spulen gebildet wurden, wobei es sich insbesondere bei den Wicklungen der niederfrequenten Übertragungsspulen (504, 105) um mehr als 10 Wicklungen handelt.
wobei es sich bei den Wicklungen der niederfrequenten Übertragungsspulen (504, 105) um 50-500 Wicklungen handelt.
und/oder wobei die niederfrequenten Übertragungsspulen (504, 105) mit Ferritmagnetkernen oder Eisenkernen versehen sind.

12. Das Nahfeldkommunikationssystem nach Anspruch 11, **dadurch gekennzeichnet, dass** die Breite eines von den niederfrequenten Übertragungsspulen (504, 105) umschlossenen Bereichs an seinem breitesten Abschnitt breiter ist als die Abschnittsbreite des HF-Geräts.

13. Das Nahfeldkommunikationssystem nach Anspruch 11, **dadurch gekennzeichnet, dass** der Abschnitt des von den niederfrequenten Übertragungsspulen (504, 105) umschlossenen Bereichs mindestens eine kreisförmige Region mit einem Durchmesser von 3 cm oder eine quadratische Region in den Maßen 3 cm x 3 cm aufweist.

14. Das Nahfeldkommunikationssystem nach Anspruch 8, **dadurch gekennzeichnet, dass** das HF-Gerät (200) im. HF-Gerät, oder das HF-Gerät (200) in einer SIM-Karte, einer UIM-Karte, einer USIM-Karte, einer TF-Karte oder einer SD-Karte des HF-Geräts angeordnet ist.

15. Das Nahfeldkommunikationssystem nach Anspruch 8, **dadurch gekennzeichnet, dass** es sich bei der Information zur Identifizierung um Identifizierungscodes handelt.

## Revendications

1. Un procédé de communication en champ proche, pour un système de communication en champ proche comprenant au moins un lecteur de carte (100) et un au moins un terminal mobile (501) équipé d'un appareil RF (200), **caractérisé en ce que** la méthode comprend les étapes suivantes:
étape a, le lecteur de carte (100) émet des signaux magnétiques alternatifs à basse fréquence (301) selon des paramètres d'émission prédéfinis, les signaux magnétiques alternatifs à basse fréquence (301) portant des informations d'identification du lecteur de carte (100), les paramètres d'émission comprenant une fréquence pour les signaux magnétiques alternatifs à basse fréquence (301) inférieure ou égale à la plus haute fréquence de travail f0 du système à laquelle le système doit être calibré.
étape b, le dispositif RF (200) reçoit et détecte les signaux magnétiques alternatifs à basse fréquence (301) sur chaque point distant, les amplifie en signaux de tension à des amplitudes constantes et en fonction des distances, déterminant ainsi si le terminal (501) équipé du dispositif RF (200) passe dans une plage de portée efficace prédéfinie à l'aide d'une tension de seuil Vt, dans laquelle la tension de seuil Vt est la même pour tous les terminaux (501) équipés du dispositif RF (200) ;
étape c, si la tension correspondant aux signaux magnétiques alternatifs à basse fréquence (301) reçus est supérieure ou égale à la tension de seuil Vt prédéfinie, le terminal (501) équipé du dispositif RF (200) passe en portée efficace prédéfinie pour carte magnétique, le dispositif RF (200) acquiert ensuite les informations d'identification du lecteur de carte (100) à partir des signaux magnétiques alternatifs à basse fréquence reçus et les émet avec ses propres informations d'identification au lecteur de carte (100) via le canal RF.
étape d, le lecteur de carte (100) reçoit une information émise via le canal RF par le dispositif RF (200), effectue une comparaison afin de vérifier si les informations d'identification du lecteur de carte (100) sont cohérentes avec ses informations d'identification ; le cas échéant, ses propres informations d'identifications sont combinées aux informations d'identification du dispositif RF (200) afin d'agir en tant qu'adresse combinée, puis effectuer la transaction magnétique avec le dispositif RF (200) via le canal RF.

2. Un procédé de communication en champ proche selon la revendication 1, **caractérisé en ce que** dans ladite étape a, la plus haute fréquence f0 de fonctionnement du système sans calibrage est déterminée par les étapes suivantes:
étape a1, détermination des valeurs cible de contrôle de distance (Din, Dv) du système, dans laquelle Din indique que tous les terminaux (501) équipés du dispositif RF (200) sont assurés de passer dans la plage de 0 ∼ Din, Dv indique une plage fluctuante de distance, de sorte que la carte peut passer dans la plage de Din ∼ (Din + Dv), et n'est pas susceptible de passer en dessous de la plage Din + Dv;
étape a2, détermination d'une plage fluctuante δ_{R} de tension détectée ou de puissance de signal (dBmV) pour le dispositif RF engendrée par le lecteur de carte (100) ;
étape a3, détermination d'une plage fluctuante δ_{C} de tension de détectée engendrée par le dispositif RF (200) lui-même ;
étape a4, détection d'une courbe tension-distance pour divers terminaux (501) et obstacles typiques à la fréquence de f ;
étape a5, détermination d'une plage fluctuante δ_{A} de tension détectée pour le dispositif RF (200) selon la valeur cible de contrôle de distance (Din, Dv), dans laquelle δ_{A} est égale à la différence de tension entre la tension correspondant au point Din et la tension correspondant au point (Din + Dv) sur la courbe tension-distance avec un gradient de courbe d'atténuation de force de champ moyen obtenu à partir des courbes tension-distance respectives pour terminaux et obstacles typiques ;
étape a6, détermination d'une plage fluctuante δ_{T} de tension détectée ou de puissance de signal (dBmV) pour le dispositif RF (200) engendrée par le terminal, dans laquelle δ_{T} indique la plage fluctuante de tension détectée une puissance de signal (dBmV) pour le dispositif RF (200) engendrée par la caractéristique d'atténuation du terminal, δ_{T} = δ_{A} - δ_{R} -δ_{C} ;
étape a7, obtention de la plus grande différence δ de force de champ entre divers terminaux et obstacles typiques sur différents points distants compris dans la plage de contrôle de distance; si δ est supérieure à δ_{T}, la fréquence f est abaissée et l'on passe à l'étape a4 ; si δ est inférieure à δ_{T}, la fréquence f est augmentée et la méthode repasse à l'étape a4; est si δ est égal à δ_{T}, la fréquence f de détection de courant est égale à la plus haute fréquence de travail f0 du système sans calibrage.

3. Un procédé de communication en champ proche selon la revendication 2, **caractérisé en ce que** dans ladite étape a, les paramètres d'émission comprennent un mode de modulation, un mode d'encodage et une amplitude de force d'induction magnétique d'émission Br, dans laquelle le mode de modulation, le mode d'encodage et l'amplitude de force d'induction magnétique d'émission Br sont déterminés au moyen des étapes suivantes:
sélection de l'un quelconque des modes d'encodage sans composant de courant continu ;
sélection d'aucun mode de modulation ou d'un mode de modulation à porteur à amplitude-invariable ;
après avoir sélectionné une fréquence de travail inférieure à f0, un mode de modulation et un mode d'encodage, sélectionner d'abord un terminal de bruit typique et des paramètres de gain pour la détection magnétique et l'amplification sur le dispositif RF (200), ce qui est facile à réaliser, détecter une amplitude de tension de bruit intrinsèque Vn pour la tension détectée ou une puissance de signal (dBmV) sur le dispositif RF (200) lorsque les signaux magnétiques à basse fréquence ne sont pas émis par le lecteur de carte (100), puis mesurer la tension détectée ou une puissance de signal (dBmV) Vr du dispositif RF (200) lorsque le lecteur de carte (100) émet les signaux magnétiques alternatifs à basse fréquence (301) en utilisant les modes de modulation et d'encodage sélectionnés et en sélectionnant l'amplitude de force d'induction magnétique d'émission Br afin que Vr/Vn>SNR, dans laquelle SNR est un rapport signal - bruit du dispositif RF (200).

4. Un procédé de communication en champ proche selon la revendication 3, **caractérisé en ce que** dans ladite étape b, la tension de seuil prédéfinie Vt est déterminée selon les étapes suivantes :
étape b1, au paramètre d'émission sélectionné, mesurer la courbe tension-distance pour divers terminaux et obstacles typiques, dans laquelle le paramètre d'émission comprend la fréquence des signaux magnétiques alternatifs à basse fréquence (301), le mode de modulation, le mode d'encodage et l'amplitude de force d'induction magnétique d'émission Br;
étape b2, obtenir une courbe tension-distance de référence, dans laquelle la courbe tension-distance de référence est la valeur moyenne obtenue à partir des courbes tension-distance pour les terminaux et obstacles typiques, et ayant la même différence d'amplitude de tension δ_{T}/2 de la limite supérieure à la limite inférieure des courbes terminales typiques ;
étape b3, sélectionner un seuil de tension détectée ou une puissance de signal (dBmV) Vt pour le dispositif RF (200), la tension correspondant au point (Din + Dv/2) étant Vt sur la courbe tension-distance de référence.

5. Un procédé de communication en champ proche selon la revendication 3, **caractérisé en ce que** la fréquence des signaux magnétiques alternatifs à basse fréquence (301) est définie sur une bande de fréquences extra basses, une bande de fréquences très basses ou une bande de fréquences basses, dans laquelle la bande de fréquences extra basses est comprise dans une plage de fréquences de 300 Hz∼3000 Hz, la bande de fréquences très basses est comprise dans une plage de fréquences de 3 KHz∼30 KHz et la bande de fréquences basses est comprise dans une plage de fréquences de 30 KHz∼300 KHz.

6. Un procédé de communication en champ proche selon la revendication 5, **caractérisé en ce que** la fréquence des signaux magnétiques alternatifs à basse fréquence (301) est de 300 Hz-50 KHz, en particulier dans lequel la fréquence des signaux magnétiques alternatifs à basse fréquence (301) est de 500 Hz, 1 KHz, 1,5 KHz, 2 KHz, 2,5 KHz, 3 KHz, 4 KHz, 5 KHz, 10 KHz, 20 KHz ou 30 KHz.

7. Un procédé de communication en champ proche selon la revendication 3, **caractérisé en ce que** le mode de modulation est le code Manchester, le code Manchester différentiel ou le code de retour à zéro; le code de modulation manipulation est par tout ou rien, par déplacement de phase ou par déplacement de fréquence.

8. Un système de communication en champ proche, **caractérisé en ce que** le système comprend au moins un lecteur de carte (100) et au moins un terminal mobile (501) équipé d'un dispositif RF (200), dans lequel :
le lecteur de carte (100) est utilisé pour émettre des signaux magnétiques alternatifs à basse fréquence (301) selon les paramètres d'émission prédéfinis, les signaux magnétiques alternatifs à basse fréquence (301) portant des informations d'identification du lecteur de carte (100), dans laquelle les paramètres d'émission comprennent la fréquence des signaux magnétiques alternatifs à basse fréquence (301) qui est inférieure ou égale à la plus haute fréquence de travail du système à laquelle le système ne nécessite pas de calibrage ; le lecteur de carte (100) est également utilisé pour recevoir les informations émises via le canal RF par le dispositif RF (200) et effectuer une comparaison afin de vérifier si les informations d'identification du lecteur de carte (100) dans les informations ci-dessus sont cohérentes avec ses informations d'identification ; le cas échéant, ses informations d'identification sont combinées aux informations d'identification du dispositif RF (200) afin d'agir en tant qu'adresse combinée, puis d'effectuer une transaction magnétique avec le dispositif RF (200) via le canal RF ;
le dispositif RF (200) est également utilisé pour recevoir et détecter les signaux magnétiques alternatifs à basse fréquence (301) sur chaque point distant et les amplifier en signaux de tension avec amplitudes constantes en fonction des distances, et déterminer ainsi si le terminal équipé du dispositif RF (200) passe dans une plage de portée efficace prédéfinie à l'aide d'une tension de seuil Vt, dans laquelle la tension de seuil Vt est la même pour tous les terminaux équipés du dispositif RF (200) ; si les signaux de tension correspondant aux signaux magnétiques alternatifs à basse fréquence (301) reçus sont supérieurs ou égaux à la tension de seuil Vt prédéfinie, le dispositif RF (200) est utilisé pour acquérir les informations d'identification du lecteur de carte (100) à partir des signaux magnétiques alternatifs à basse fréquence reçus et les émettre avec ses propres informations d'identification au lecteur de carte (100) via le canal RF ; le dispositif RF (200) est utilisé en outre pour effectuer un passage avec le lecteur de carte (100) via le canal RF.

9. Un système de communication en champ proche selon la revendication 8, **caractérisé en ce que** le lecteur de carte (100) comprend au moins une bobine émettrice basse fréquence (504, 105), au moins un circuit de commande (106), au moins un circuit d'encodage (108), au moins un premier processeur principal (101), au moins un circuit émetteur/récepteur RF (103) et au moins une antenne RF (104), dans lequel la bobine émettrice basse fréquence (504, 105), le circuit de commande (106), le circuit d'encodage (108), le premier processeur principal (101), le circuit émetteur/récepteur RF (103) et l'antenne RF (104) sont connectés en série ;
le dispositif RF (200) comprend au moins un circuit à induction magnétique de fréquences basses (207), au moins un circuit d'amplification de fréquences basses (206), au moins un circuit de jugement de seuil et de démodulation (205), au moins un deuxième processeur principal (201), au moins un circuit émetteur/récepteur RF (203) et au moins une antenne RF (204), dans lequel le circuit à induction magnétique de fréquences basses (207), le circuit d'amplification de fréquences basses (206), le circuit de jugement de seuil et de démodulation (205), le deuxième processeur principal (201), le circuit émetteur/récepteur RF (203) et l'antenne RF (204) sont connectés en série.

10. Un système de communication en champ proche selon la revendication 9, **caractérisé en ce que** un circuit de modulation (107) est agencé entre le circuit de commande (106) et le circuit d'encodage (108) du lecteur de carte (100).

11. Un système de communication en champ proche selon la revendication 9 ou 10, **caractérisé en ce que** les bobines émettrices basses fréquences (504, 105) sont des bobines formées de câbles émaillés ou bobines PCB, et en particulier dans lequel le nombre de spires des bobines d'émission basses fréquences (504, 105) est supérieur à 10, préférablement dans lequel le nombre de spires des bobines d'émission basses fréquences (504, 105) est compris entre 50 et 500, et/ou dans lequel les bobines d'émission basses fréquences (504, 105) sont remplies de noyaux magnétiques de ferrite ou noyaux de fer.

12. Un système de communication en champ proche selon la revendication 11, **caractérisé en ce que** une partie agencée dans les bobines émettrices basse fréquences (504, 105) comprend une largeur, en sa section la plus large, supérieure à la largeur de la section du dispositif RF.

13. Un système de communication en champ proche selon la revendication 11, **caractérisé en ce que** la section agencée dans les bobines émettrices basse fréquences (504, 105) comprend au moins une région circulaire d'un diamètre de 3 cm ou une région carrée de 3 cm x 3 cm.

14. Un système de communication en champ proche selon la revendication 8, **caractérisé en ce que** le dispositif RF (200) est agencé dans le dispositif RF, ou **en ce que** le dispositif RF (200) est agencé dans une carte SIM, une carte UIM, une carte USIM, une carte TF ou une carte SD du dispositif RF.

15. Un système de communication en champ proche selon la revendication 8, **caractérisé en ce que** les informations d'identification sont des codes d'identification.
